(19) Europäisches Patentamt
European Patent Office
Office européen des brevets

(11) **EP 2 667 473 A1**

(12) **EUROPEAN PATENT APPLICATION**
published in accordance with Art. 153(4) EPC

(43) Date of publication:
   **27.11.2013 Bulletin 2013/48**

(51) Int Cl.:
   *H02J 3/00* (2006.01)   *G06Q 10/00* (2012.01)
   *H02J 13/00* (2006.01)

(21) Application number: **12810938.6**

(22) Date of filing: **13.07.2012**

(86) International application number:
   **PCT/JP2012/068000**

(87) International publication number:
   **WO 2013/008934 (17.01.2013 Gazette 2013/03)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**

(30) Priority: **13.07.2011   JP 2011154495**

(71) Applicant: **Nitto Denko Corporation
   Ibaraki-shi, Osaka 567-8680 (JP)**

(72) Inventors:
   • **MATSUYAMA Takashi
     Kyoto-shi
     Kyoto 606-8501 (JP)**

   • **KATO Takekazu
     Kyoto-shi
     Kyoto 606-8501 (JP)**
   • **YUASA Kenji
     Kyoto-shi
     Kyoto 606-8501 (JP)**

(74) Representative: **Grünecker, Kinkeldey,
   Stockmair & Schwanhäusser
   Leopoldstrasse 4
   80802 München (DE)**

(54) **ON-DEMAND POWER CONTROL SYSTEM, ON-DEMAND POWER CONTROL SYSTEM PROGRAM, AND COMPUTER-READABLE RECORDING MEDIUM RECORDED WITH SAID PROGRAM**

(57)   In order to enable control of power supply for a commercial power source in real time in response to a request for power required by a user, and to control power supply matching the QoL required by the user through the user's daily life, a dynamic priority control apparatus of the present invention is characterized by including initial target value updating means that allocates a difference between instantaneous power of an initial target value, and actual instantaneous power, to subsequent instantaneous power of the initial target value to calculate an updated initial target value; compares the updated initial target value with the maximum instantaneous power; if the updated initial target value is smaller, updates the subsequent instantaneous power of the initial target value, as the updated initial target value; and if the updated initial target value is larger, updates the instantaneous power of the initial target value, to be the maximum instantaneous power, and sets it as the updated initial target value, and power arbitration means that calculates a total value of power consumed by electrical devices in operation; calculates priorities of both electrical devices based on electrical device property class data; compares the total value of the consumed power with the updated initial target value; if the total value of the consumed power is smaller, supplies power to an electrical device that has performed transmission; if the total value of the consumed power is larger, calls the priorities from a memory to select an electrical device having the priority of the minimum value; determines which of properties the electrical device corresponds to, with reference to the above class data; and performs arbitration based on the priorities of the electrical devices.

[Figure 8]

**Description**

[Technical Field]

The present invention relates to an on-demand power control system, an on-demand power control system program, and a computer-readable recording medium recording the same program in a home or office network and, more particularly to, an on-demand power control system, an on-demand power control system program, and a computer-readable recording medium recording the same program for controlling power supply by dynamically changing priorities of electrical devices such that power consumption (Wh) does not exceed an upper limit, without impairing the Quality of Life (hereinafter referred to as "QoL") required by a user through the user's daily life.

[Background Art]

An on-demand power control system is intended to implement energy management in households and offices. The system aims to make a 180-degree shift from a supplier-centric "push" power network to a user- or consumer-driven "pull" power network. The system is a system in which a home server infers "which one of the device requests is most important" from a user's usage pattern in response to requests for power from various devices that are household electrical products at home (e.g., requests from an air conditioner and a light) and performs control so as to supply power to electrical devices beginning with an important one with high priority, i.e., performs Energy on Demand control (hereinafter referred to as "EoD control"). The system will be referred to as an "EoD control system" hereinafter. The EoD control system is proposed by Professor Takashi Matsuyama, Kyoto University.

The greatest benefit of use of the system is that energy saving and $CO_2$ emissions reduction can be implemented from the demand side. For example, if a user sets instructions to make a 20% electric rate cut in the home server in advance, a user-centric effort to feed only power cut by 20% can be made by EoD control, and the system can implement energy saving and $CO_2$ emissions reduction.

As patent literatures regarding the EoD control, the inventions below, the "home network" (see Patent Literature 1) and the "supply/demand arbitration system" (see Patent Literature 2), are known. The home network is composed of a server (master), detection means and control means of the server, and members (slaves). The server and members are connected over a LAN. At home, n electrical devices are connected to an outlet through n members. The detection means detects the operation statuses of m electrical devices actually in operation. The control means computes power consumption at home using n pieces of power data transmitted from the n members and, when the calculated total power usage becomes equal to or larger than a threshold, controls j members so as to limit power supplied thereto by outputting to, among the m electrical devices, j electrical devices whose operating state changes in steps or continuously a control signal for controlling the j electrical devices such that power consumed by the m electrical devices is smaller than the threshold for the total power usage. That is, the server is a server which preferentially supplies power to an electrical device whose operating state changes between on and off, such as a ceiling light, a desk light, or a coffee maker, in order to make the consumed power lower than the threshold value for the total power usage.

Note that the above-described member is called a "smart tap" today. The smart tap is composed of voltage and current sensors which measure power, a semiconductor relay for power control, a ZigBee module for communication, and a microcomputer with a built-in DSP which performs overall control of the components and internal processing. The microcomputer calculates consumed power from current and voltage waveforms measured by the voltage and current sensors attached to the smart tap, extracts a small number of features representing characteristics of the voltage and current waveforms, and identifies a household electrical device from the features using data for comparison stored in advance in an internal memory of the smart tap. This method is a method which has been well-known since before the filing of the present application. Pieces of data for each cycle (60 seconds) on consumed power calculated at intervals of 0.5 seconds by the microcomputer are held in the internal memory of the smart tap and are transmitted to a server in a plurality of packets (see Non Patent Literatures 1 and 2).

The above-described supply/demand arbitration system is an invention which is developed from the idea that if not only solar cells but also fuel cells and storage batteries become widespread in ordinary households, power supply based on the suppliable power of the power source side and power consumed by the home appliance side becomes more important. Accordingly, the supply/demand arbitration system is composed of an arbitration server, apparatuses as power sources (a commercial power source, a photovoltaic power generation apparatus, a fuel cell, and a storage battery) connected to the arbitration server, a memory and a power control device connected to the arbitration server, and a plurality of electrical devices connected to the arbitration server over a network. Each electrical device includes a microcomputer for its own control and further includes a measuring instrument for measuring its consumed power and a function of communicating with the arbitration server. Home appliance status table data, power source status table data, priority data, upper limit data, target value data, and the like are stored in a data storage area of the memory.

The arbitration server of the supply/demand arbitration system manages the statuses of the home appliances and power sources by inquiring of the home appliances and power sources about their statuses at intervals of 2 to 3 seconds, to which a refresh timer counts, and updating a home appliance status table and a power source status table according to responses to the inquiries. That is, the arbitration server updates the home appliance status table and power source status table at intervals of 2 to 3 seconds and cannot control power supply in real time in response to a request for power required by a user. Additionally, since the volume of data processed at the time of calculating supplied power and capacity is enormous, the load on the arbitration server is heavy.

When receiving a supply request message from an electrical device, the arbitration server sets an upper limit for consumed power and a target value for consumed power. The upper limit is the total sum of the current suppliable power of the power sources (the total suppliable power will be referred to as "the total power of the power sources" hereinafter) and is calculated by referring to the power source status table stored in the memory. The arbitration server calculates the total sum of the power of electrical devices in use and determines whether the sum of requested power and the total sum of the power is less than a target value for the total power of the power sources.

The priority table is a table for determining the priority of an electrical device or a supply request message from the electrical device and has a value indicating priority (0 to 3) corresponding to the message type (request type $T_a$) of a supply request message. There are four possible values (A, B, C, and D) for the request type $T_a$. The arbitration server is a power supply control apparatus which controls power supply such that the target value for the total sum of the power sources is not exceeded, on the basis of the priority of the electrical device.

There is also known a home energy management system (HEMS) which is a management system for electrical devices. The HEMS sets a control rule for an electrical device (e.g., a rule in which a cooler is automatically stopped when the outside air temperature is low) and performs automatic control. The HEMS achieves energy saving by optimizing a manner of utilization of an electrical device and is based on the manner of utilization of the electrical device. Since such a conventional HEMS is focused on a manner of utilization of an electrical device, the HEMS does not take into account how much power can be reduced by changing manners of utilization of electrical devices and cannot guarantee a rate of power reduction that can meet a request for power saving.

[Citation List]

[Patent Literature]

[Patent Literature 1]
International Publication No. WO 2008/152798
[Patent Literature 2]
Japanese Patent Laid-Open No. 2010-193562

[Non Patent Literature]

[Non Patent Literature 1]
"i-Energy and Smart Grid," Takekazu Kato and four others, IEICE technical report, pp. 133-138, January 19, 2009
[Non Patent Literature 2]
"i-Energy and Smart Grid," Professor Takashi Matsuyama, Graduate School, Kyoto University, p. 21, July 29, 2009

[Summary of Invention]

[Technical Problem]

A user using an electrical device that is a household or office electrical product has a need to reduce consumed power and power consumption by even a small amount. In order to meet the need, the above-described home network preferentially supplies power to an electrical device (e.g., a ceiling light) whose operating state changes between on and off, in relation to the priorities of electrical devices, such that consumed power and power consumption do not exceed respective upper limits. The above-described supply/demand arbitration system preferentially supplies power to an electrical device (e.g., a refrigerator or an air conditioner) having the electrical device request type $T_a$ of 0 or 1. In both cases, the priorities of electrical devices are fixed. The status of a user's use of an electrical device, however, changes momentarily.

If priorities are fixed as described above, an electrical device may be unavailable when necessary.

The arbitration server manages the statuses of the home appliances and power sources by updating the home appliance status table and power source status table at intervals of 2 to 3 seconds, to which the refresh timer counts. Accordingly, the arbitration server cannot respond instantaneously to a request for power required by a user (e.g., a request to operate an air conditioner), i.e., cannot control power supply in real time. Additionally, the volume of data to be processed is enormous to increase the load.

A pattern of power use required by a user through the user's daily life differs among, for example, a household with a small child, a double-income household, and a one-person household. However, the above-described arbitration server performs power control with no respect to a user's pattern of power use and impairs the QoL of the user.

The arbitration server determines supplied power by comparing the total power of apparatuses as power sources (a commercial power source, a photovoltaic power generation apparatus, a fuel cell, and a storage battery) currently used on a trial basis with power consumed by required electrical devices. In contrast, an EoD control system according to the present invention is an invention for saving the power of commercial power sources, which is a present-day urgent problem, and is targeted at different power sources.

Damage to the Fukushima No. 1 nuclear power plant caused by the Great East Japan Earthquake in March 2011 tightened the power supply and demand balance in Japan, and rolling blackouts were implemented to avoid a massive blackout during on-peak hours. A further reduction in power usage is required to cope with an increase in power demand in summer. The Japanese government announced a policy to reduce electricity consumption by about 15% compared to the previous year, regarding a power-saving target within the jurisdictions of Tokyo Electric Power Company and Tohoku Electric Power Company during an on-peak period in summer that is a pillar of countermeasures against power shortages. Combined with this, a user's desire to reduce the power consumption of electrical devices, even if only by a small amount, without impairing the QoL and avoid a massive outage during on-peak hours is becoming strong.

Therefore, the present invention, which has been made in consideration of the conventional problems, has as its object to provide an EoD control system, an EoD control system program, and a computer-readable recording medium recording the program which supply power to electrical devices on the basis of not fixed priorities determined in advance of the electrical devices but priorities varying according to a user's status of use, can control power supply from a commercial power source in real time in response to a request for power required by the user, and control power supply matching the QoL required by the user through the user's daily life.

[Solution to Problem]

As a result of keen examination to achieve the above-described object, the present inventors have reached the present invention.

An on-demand power control system according to claim 1 of the present invention is an on-demand power control system including a commercial power source, a plurality of electrical devices, a smart tap connected to the electrical devices, a dynamic priority control apparatus which includes a memory and controls power supply to the electrical devices, and a network to which the dynamic priority control apparatus is connected via the smart tap, wherein the dynamic priority control apparatus includes initial target value updating means for allocating a difference between instantaneous power with an initial target value and actual instantaneous power to subsequent instantaneous power with an initial target value to calculate an updated initial target value, comparing the updated initial target value with maximum instantaneous power, if the updated initial target value is smaller, updating the subsequent instantaneous power with the initial target value to have the updated initial target value, and if the update initial target value is larger, updating the instantaneous power with the initial target value to be the maximum instantaneous power and setting the maximum instantaneous power as the updated initial target value and power arbitration means for calculating a total value of power consumed by an electrical device having transmitted a power request message and an electrical device in operation for a time when the power request message is received from the smart tap, calculating priorities of the electrical devices based on electrical device property class data, in which electrical devices are classified into classes according to properties of methods for supplying power to an electrical device, comparing the total value of the consumed power with the updated initial target value, if the total value of the consumed power is smaller, supplying power to the electrical device having performed transmission, if the total value of the consumed power is larger, calling up the priorities from the memory to select an electrical device having the minimum priority, determining which of the properties the electrical device corresponds to, with reference to the electrical device property class data, and performing arbitration based on the priorities of the electrical devices according to the property, to which the electrical device corresponds. According to claim 2 of the present invention, in the on-demand power control system, the instantaneous power is consumed power which is obtained by adding up consumed power in each of intervals of a minimum control interval $\tau$ to obtain a total value and averaging the total value.

According to claim 3 of the present invention, in the on-demand power control system, the minimum control interval $\tau$ is 5 to 10 minutes.

According to claim 4 of the present invention, in the on-demand power control system, information to be processed by the initial target value updating means is the instantaneous power, and information to be processed by the power arbitration means is the consumed power.

According to claim 5 of the present invention, in the on-demand power control system, a power use plan in which the initial target value is created based on a user's pattern of power consumption is created using one of a fixed rate reduction plan, a peak reduction plan, and a cost reduction plan.

According to claim 6 of the present invention, in the on-demand power control system, an initial target value $T_0(t)$ (W) which is created using the fixed rate reduction plan is given by equations (1) and (2):

$$D'(t) = \begin{cases} D(t) & \text{if } D(t) \leq M(t) \\ M(t) & \text{otherwise} \end{cases} \quad (1)$$

$$T_0(t) = \frac{C}{\displaystyle\sum_{t_{start}}^{t_{end}} \tau \, D'(t)} D'(t) \quad (2)$$

where C (Wh) is a ceiling (an upper limit for integral power consumption) set by the user, M(t) (W) is maximum instantaneous power at a time t, and D(t) (W) is a predicted value for power demand at the time t.

According to claim 7 of the present invention, in the on-demand power control system, an initial target value created using the peak reduction plan is created by reducing an initial target value only during on-peak power use hours in the power use plan.

According to claim 8 of the present invention, in the on-demand power control system, an initial target value created using the cost reduction plan is created by reducing an initial target value in the power use plan according to power costs.

According to claim 9 of the present invention, in the on-demand power control system, the dynamic priority control apparatus controls power supply to the electrical devices such that the ceiling is not exceeded and the maximum instantaneous power is not exceeded.

According to claim 10 of the present invention, in the on-demand power control system, the instantaneous power with the initial target value, the actual instantaneous power, and the electrical device property class data are stored in the memory before the dynamic priority control apparatus is activated.

According to claim 11 of the present invention, in the on-demand power control system, a method for allocating the difference to be allocated to the subsequent instantaneous power with the initial target value is one of an equal difference allocation method that equally allocates the difference and an instantaneous power allocation method that allocates the difference to only one immediately succeeding instantaneous power.

According to claim 12 of the present invention, in the on-demand power control system, the electrical device property class data is segmented according to properties of methods for supplying power to an adjustable electrical device, a suspendable electrical device, and a waitable electrical device among electrical devices.

According to claim 13 of the present invention, in the on-demand power control system, the electrical device property data has a segment for which a user can arbitrarily select a device in order to ensure a safe and comfortable life in addition to segments for the properties of the methods for supplying power to an adjustable electrical device, a suspendable electrical device, and a waitable electrical device among the electrical devices.

According to claim 14 of the present invention, in the on-demand power control system, the adjustable property is a property which allows change of power supplied during operation, the waitable property is a property which allows waiting for power supply at startup, and the suspendable property is a property which allows suspension of power supply during operation.

According to claim 15 of the present invention, in the on-demand power control system, electrical devices having the adjustable property include a notebook PC, a boiler, a toilet seat with a warm-water shower feature, a microwave oven, a heater air conditioner, a refrigerator, a TV, and a dryer.

According to claim 16 of the present invention, in the on-demand power control system, electrical devices having the waitable property include a notebook PC, a boiler, a toilet seat with a warm-water shower feature, a microwave oven, a dishwasher, a rice cooker, and a toaster.

According to claim 17 of the present invention, in the on-demand power control system, electrical devices having the suspendable property include a notebook PC, a boiler, a heater air conditioner, a refrigerator, a dishwasher, a rice cooker, a copying machine, and an electric pot.

According to claim 18 of the present invention, in the on-demand power control system, electrical devices not having the adjustable, suspendable, and waitable properties include a gas detector, a respirator, and a network device such as a router.

According to claim 19 of the present invention, in the on-demand power control system, the electrical device property class data is composed of respective parts for eight classes.

According to claim 20 of the present invention, in the on-demand power control system, a dynamic priority control apparatus according to claim 1 further includes continuous monitoring means for monitoring consumed power at all times.

According to claim 21 of the present invention, in the on-demand power control system, the continuous monitoring means controls power supply such that overall consumed power falls below the maximum instantaneous power without waiting for a lapse of the minimum control interval $\tau$ if the overall consumed power exceeds the maximum instantaneous power for a fixed period d or longer.

According to claim 22 of the present invention, in the on-demand power control system, the fixed period d is 0.5 to 2 seconds.

According to claim 23 of the present invention, in the on-demand power control system, the continuous monitoring means calculates a total value of power consumed by electrical devices in operation, calculates priorities of the electrical devices based on electrical device property class data, in which electrical devices are classified into classes according to three types of properties, compares the total value of the consumed power with the maximum instantaneous power, if the total value of the consumed power is smaller, ends processing, if the total value of the consumed power is larger, selects an electrical device having the minimum priority, determines which of the three types of properties the electrical device corresponds to, with reference to the electrical device property class data, and selects a device having the minimum priority according to the property, to which the electrical device corresponds.

An on-demand power control system program according to claim 24 of the present invention is a program for causing a computer to operate as a dynamic priority control apparatus in an on-demand power control system, the on-demand power control system including a commercial power source, a plurality of electrical devices, a smart tap connected to the electrical devices, the dynamic priority control apparatus which includes a memory and controls power supply to the electrical devices, and a network to which the dynamic priority control apparatus is connected via the smart tap, the program causing the computer to execute, by the dynamic priority control apparatus, a process of allocating a difference between instantaneous power with an initial target value and actual instantaneous power to subsequent instantaneous power with an initial target value to calculate an updated initial target value, comparing the updated initial target value with the maximum instantaneous power, if the updated initial target value is smaller, updating the subsequent instantaneous power with the initial target value to have the updated initial target value, and if the update initial target value is larger, updating the instantaneous power with the initial target value to be the maximum instantaneous power and setting the maximum instantaneous power as the updated initial target value and a process of calculating a total value of power consumed by an electrical device having transmitted a power request message and an electrical device in operation for a time when the power request message is received from the smart tap, calculating priorities of the electrical devices based on electrical device property class data, in which electrical devices are classified into classes according to three types of properties, comparing the total value of the consumed power with the updated initial target value, if the total value of the consumed power is smaller, supplying power to the electrical device having performed transmission, if the total value of the consumed power is larger, calling up the priorities from the memory to select an electrical device having the minimum priority, determining which of the three types of properties the electrical device corresponds to, with reference to the electrical device property class data, and performing arbitration based on the priorities of the electrical devices according to the property, to which the electrical device corresponds.

According to claim 25 of the present invention, in the on-demand power control system program, the instantaneous power is consumed power that is obtained by adding up consumed power in each of intervals of a minimum control interval $\tau$ to obtain a total value and averaging the total value.

According to claim 26 of the present invention, in the on-demand power control system program, the minimum control interval $\tau$ is 5 to 10 minutes.

According to claim 27 of the present invention, in the on-demand power control system program, information to be processed by the initial target value updating means is the instantaneous power, and information to be processed by the power arbitration means is the consumed power.

According to claim 28 of the present invention, in the on-demand power control system program, power supply to the electrical devices is controlled such that the ceiling is not exceeded and the maximum instantaneous power is not exceeded.

According to claim 29 of the present invention, in the on-demand power control system program, the electrical device property class data is segmented according to adjustable, suspendable, and waitable properties of electrical devices.

According to claim 30 of the present invention, in the on-demand power control system program, the electrical device property data has a segment for which a user can arbitrarily select a device in order to ensure a safe and comfortable life in addition to segments for the properties of methods for supplying power to an adjustable electrical device, a suspendable electrical device, and a waitable electrical device among the electrical devices.

According to claim 31 of the present invention, in the on-demand power control system program, the adjustable property is a property which allows change of power supplied during operation, the waitable property is a property which allows waiting for power supply at startup, and the suspendable property is a property which allows suspension of power supply during operation.

According to claim 32 of the present invention, in the on-demand power control system program, electrical devices having the adjustable property include a notebook PC, a boiler, a toilet seat with a warm-water shower feature, a microwave oven, a heater air conditioner, a refrigerator, a TV, and a dryer.

According to claim 33 of the present invention, in the on-demand power control system program, electrical devices having the waitable property include a notebook PC, a boiler, a toilet seat with a warm-water shower feature, a microwave oven, a dishwasher, a rice cooker, and a toaster.

According to claim 34 of the present invention, in the on-demand power control system program, electrical devices having the suspendable property include a notebook PC, a boiler, a heater air conditioner, a refrigerator, a dishwasher, a rice cooker, a copying machine, and an electric pot.

According to claim 35 of the present invention, in the on-demand power control system program, electrical devices not having the adjustable, suspendable, and waitable properties include a gas detector, a respirator, and a network device such as a router.

An on-demand power control system recording medium according to claim 36 of the present invention is a computer-readable medium recording a program according to claim 24.

An on-demand power control system recording medium according to claim 37 of the present invention is a computer-readable medium recording a program according to claim 25.

An on-demand power control system recording medium according to claim 38 of the present invention is a computer-readable medium recording a program according to claim 28.

An on-demand power control system recording medium according to claim 39 of the present invention is a computer-readable medium recording a program according to claim 30.

[Advantageous Effects of Invention]

An EoD control system according to the present invention can change the priorities of electrical devices according to an electrical device required by a user through the user's daily life and the user's status of use of the electrical device and can thus use a required electrical apparatus when necessary.

Additionally, the EoD control system according to the present invention is a system which controls power supply on the basis of a user's pattern of power use and maximum instantaneous power and a ceiling set by the user and can thus guarantee the maximum instantaneous power and ceiling set by the user without impairing the Quality of Life of the user using electrical devices. The EoD control system is also a system which changes the priorities of electrical devices on the basis of the power consumed by the electrical devices when a user requests power and can control power supply in real time.

Moreover, the EoD control system according to the present invention is a system which can automatically perform control so as to respond to a request for a reduction in power from the supply side without fail and can thus guarantee a rate of power reduction on the demand side in response to a request from the supply side while using necessary electrical devices, without requiring additional labor.

Furthermore, the EoD control system according to the present invention is characteristically a power management tool. Electrical devices are thus classified according to a power adjustment system. The introduction of power arbitration means that guarantees an upper limit for used power allows provision of a guarantee of a power saving rate and a peak reduction rate. For this reason, if an on-demand power control system is used instead of a conventional HEMS, the current problem of tight power demand and supply situation can be addressed.

[Brief Description of Drawings]

[Figure 1] Figure 1 is a schematic diagram showing the configuration of a communication network of an EoD control system.

[Figure 2] Figure 2 is a schematic diagram showing the configuration of a power network of the EoD control system according to the present invention.

[Figure 3] Figure 3 is an arrangement view showing positions where smart taps for installing electrical devices are arranged.

[Figure 4] Figure 4 is a relational view showing the relation of connection among an outlet, a smart tap, and an electrical device.

[Figure 5] Figure 5 is a floor plan showing the layout of a model house.

[Figure 6] Figure 6 is a chart with a graph showing power consumed by electrical devices.

[Figure 7] Figure 7 is a chart with a graph showing power consumption obtained by cumulating the power consumed by the electrical devices.

[Figure 8] Figure 8 is a functional block diagram showing functions of a dynamic priority control apparatus.

[Figure 9-1] Figure 9-1 is an explanatory chart for explaining a method for setting an initial planned value from a power use plan.

[Figure 9-2] Figure 9-2 is an explanatory chart for explaining a method for setting an initial planned value from a power use plan.

[Figure 9-3] Figure 9-3 is an explanatory chart for explaining a method for setting an initial planned value from the power use plan.

[Figure 10] Figure 10 is a chart for explaining a case where control is performed while actual consumed power and an initial target value are maintained.

[Figure 11] Figure 11 is a chart for explaining a case where control that feeds back a difference between actual instantaneous power and an initial target value to subsequent planned values is performed.

[Figure 12] Figure 12 is a chart showing the level of satisfaction of a dryer with power.

[Figure 13] Figure 13 is a chart showing the level of satisfaction of an electric heater with power.

[Figure 14] Figure 14 is a chart showing the level of satisfaction of a rice cooker with power.

[Figure 15] Figure 15 is a sequence chart for explaining a procedure by which the dynamic priority control apparatus supplies power according to priority in response to a power request message.

[Figure 16] Figure 16 is a functional block diagram of a second embodiment.

[Figure 17] Figure 17 is a flow chart showing preprocessing that sets a power use plan before a dynamic priority control apparatus is activated.

[Figure 18] Figure 18 is a flow chart showing overall processing of the dynamic priority control apparatus.

[Figure 19] Figure 19 is a flow chart showing a power use plan setting process.

[Figure 20] Figure 20 is a flow chart showing an initial target value updating process.

[Figure 21-1] Figure 21-1 is a flow chart showing a priority arbitration process.

[Figure 21-2] Figure 21-2 is a flow chart showing the priority arbitration process.

[Figure 21-3] Figure 21-3 is a flow chart showing the priority arbitration process.

[Figure 21-4] Figure 21-4 is a flow chart showing the priority arbitration process.

[Figure 22-1] Figure 22-1 is a flow chart showing a continuous monitoring process.

[Figure 22-2] Figure 22-2 is a flow chart showing the continuous monitoring process.

[Figure 22-3] Figure 22-3 is a flow chart showing the continuous monitoring process.

[Figure 23-1] Figure 23-1 is an explanatory view for explaining a process to be performed by power arbitration means.

[Figure 23-2] Figure 23-2 is an explanatory view for explaining the process to be performed by the power arbitration means.

[Figure 23-3] Figure 23-3 is an explanatory view for explaining the process to be performed by the power arbitration means.

[Figure 23-4] Figure 23-4 is an explanatory view for explaining the process to be performed by the power arbitration means.

[Figure 24-1] Figure 24-1 is a chart showing a graph of instantaneous power obtained when a power use plan reduced by 10% and 30% is used.

[Figure 24-2] Figure 24-2 is a chart showing a graph of instantaneous power obtained when the power use plan reduced by 10% and 30% is used.

[Figure 25-1] Figure 25-1 is a chart showing a graph of integral power consumption obtained when the power use plan reduced by 10% and 30% is used.

[Figure 25-2] Figure 25-2 is a chart showing a graph of integral power consumption obtained when the power use plan reduced by 10% and 30% is used.

[Figure 26-1] Figure 26-1 is a chart showing graphs of instantaneous power for six types of electrical devices obtained when the power use plan reduced by 10% and 30% is used.

[Figure 26-2] Figure 26-2 is a chart showing graphs of instantaneous power for the six types of electrical devices obtained when the power use plan reduced by 10% and 30% is used.

[Description of Embodiments]

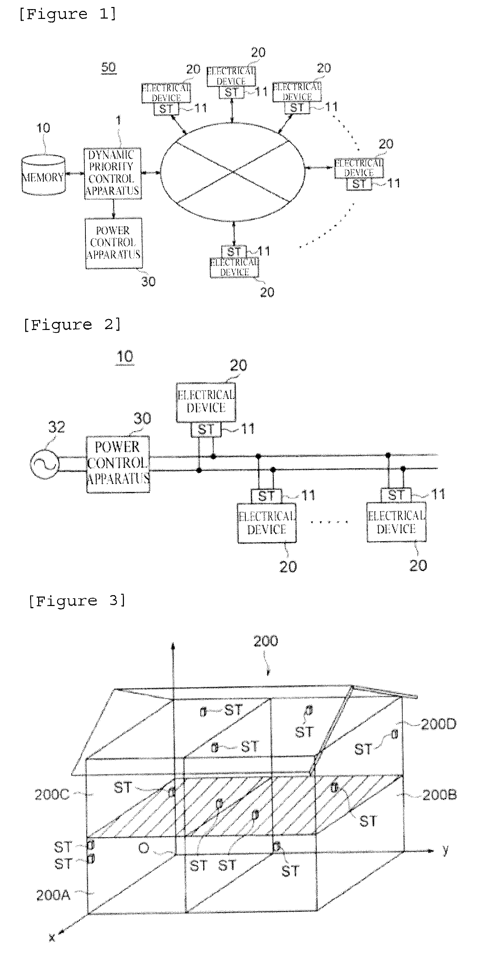

The configuration of a communication network of an EoD control system according to the present invention will be described with reference to Figure 1.

Figure 1 is a schematic diagram showing the configuration of a communication network of an EoD control system according to the present invention. An EoD control system 50 according to the present invention is installed in offices and households. The EoD control system 50 is composed of a dynamic priority control apparatus 1 (hereinafter simply referred to as a "priority apparatus"), smart taps 11, electrical devices 20 (hereinafter simply referred to as "devices") which are household or office electrical products, and a power control apparatus 30. The priority apparatus is connected to the smart taps 11 (hereinafter referred to as "STs") over a local area network (hereinafter referred to as a "LAN") by a wired or wireless LAN. The LAN is merely an example, and the present invention is not limited to this. According to the present invention, the priority apparatus may be connected to the STs over a network such as WiFi, PLC, ZigBee, or specific low-power radio waves. The devices are connected to the STs through power cords. Accordingly, the STs can communicate with the priority apparatus over the LAN.

The EoD control system according to the present invention does not unconditionally supply power when a certain device is turned on, and power is requested. The EoD control system first transmits a message requesting power to the priority apparatus and determines, for each device, whether to enable power supply and suppliable power in the priority apparatus through adjustment of suppliable power, device priorities, and the like, on the basis of a user's pattern of power use. Since each device uses only allowed power, power consumption and consumed power do not exceed target values. The EoD control system is a system which can avoid power saving by a reduction in power consumption and a massive blackout during on-peak hours.

The priority apparatus is a general-purpose server and includes a CPU 1a. The priority apparatus is provided with an internal memory 10 (hereinafter simply referred to as a "memory"), which is a semiconductor storage device such as a hard disk or a RAM that can be directly read or written.

Power from a commercial power source is supplied to the priority apparatus and the devices 20 through the power control apparatus 30.

Note that although an ordinary household will be described as the installation location of the EoD control system 50 according to the present invention, the present invention is not limited to this. Any location such as an office may be adopted as long as a ST can be installed. An external type ST which is connected to a power outlet will be described as a ST of the EoD control system according to the present invention. The present invention, however, is not limited to this, and an internal type one which is embedded in a power outlet may be employed.

Figure 2 is a schematic diagram showing the configuration of a power system network of the EoD control system 50 shown in Figure 1.

As has been described with reference to Figure 1, the EoD control system 50 includes the power control apparatus 30. A commercial power source 32 is connected to the power control apparatus 30. The power control apparatus 30 is composed of, for example, a plurality of breakers (not shown) and includes one main breaker and a plurality of sub-breakers. Power (AC voltage) from the commercial power source 32 is given to the primary side of the main breaker, and an output from the secondary side of the main breaker is distributed among the plurality of sub-breakers. Note that the commercial power source 32 is connected to the primary side of the main breaker through a switch (not shown) for supplying/stopping supply of commercial current. The switch is turned on/off by a switching signal from the priority apparatus.

The priority apparatus and the plurality of devices 20 are connected to the output side of the power control apparatus 30, i.e., the secondary sides of the sub-breakers. Although not shown, the priority apparatus is connected so as to be capable of receiving power from the power control apparatus 30 by inserting its attachment plug into, e.g., a wall socket. For the plurality of devices, the STs each include a plug which is an attachment plug and an outlet, and power from the commercial power source 32 is fed from the plug. The plurality of devices are connected so as to be capable of receiving power through plugs of the plurality of devices connected to the outlets.

As described above, in the EoD control system according to the present invention, not only the power network shown in Figure 2 but also the communication network shown in Figure 1 are constructed.

Figure 3 is an explanatory view for explaining the arrangement positions of devices by STs connected to outlets at home.

Referring to Figure 3, a house 200 is composed of, for example, a living room 200A, a Japanese-style room 200B, and Western-style rooms 200C and 200D. The living room 200A and Japanese-style room 200B are arranged on the first floor, and the Western-style rooms 200C and 200D are arranged on the second floor. As shown in Figure 3, respective STs are connected to outlets provided in walls. For example, five STs are connected to outlets provided in walls of the living room 200A, two STs are connected to outlets provided in walls of the Japanese-style room 200B, two STs are connected to outlets provided in walls of the Western-style room 200C, and two STs are connected to outlets provided in walls of the Western-style room 200D. As described above, all devices are connected to a power source through STs.

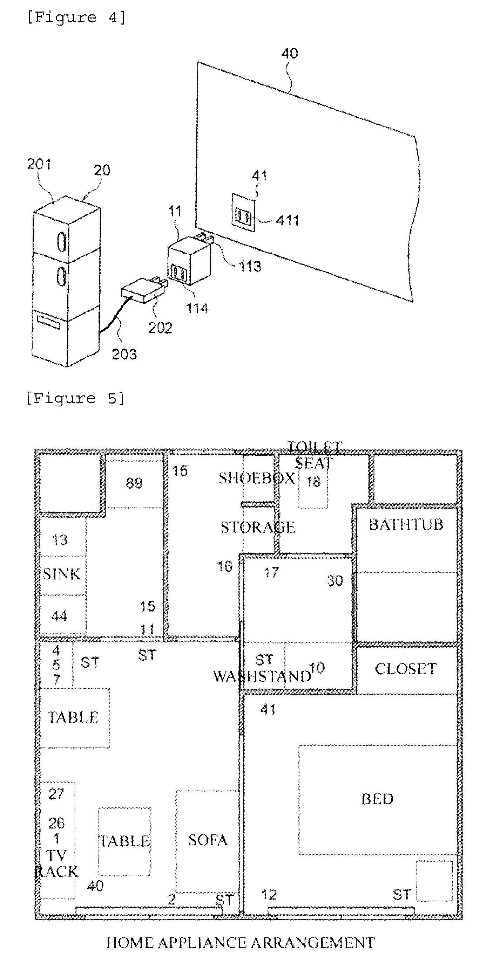

Figure 4 is an explanatory view for explaining the relation of connection among an outlet connected to a commercial power source and provided in a wall, and the smart tap 11, and a device. Referring to Figure 4, a refrigerator 201 which is a device is composed of a plug unit 202 including an attachment plug and a cord 203, and the plug unit 202 of the refrigerator 201 is inserted into/removed from an outlet 114 of the ST. An outlet 41 is arranged in a wall 40, and commercial power is supplied to slots 411 in the outlet 41 through a power system at home. A plug 113 which is an attachment plug is inserted into/removed from the slots 411.

Figure 5 is a floor plan showing the layout of a model house used in an example of dynamic priority information processing (to be described later) and a demonstration experiment.

The model house has one bedroom plus a living room, a dining room, and a kitchen. Reference numerals in Figure 5 denote device names shown in Table 1 and locations where switches for the devices are installed. Reference characters ST in Figure 5 denote a location where the smart tap 11 is arranged. Five STs are arranged in the model house.

[Table 1]

| id | name | id | name | id | name |
|----|------|----|------|----|------|
| 1 | TV | 12 | bedroom light | 30 | bathroom light and ventilating fan |
| 2 | air conditioner | 13 | kitchen light 1 | 40 | electric carpet |
| 4 | pot | 15 | corridor light | 41 | heater |
| 5 | coffee maker | 16 | washroom light | 42 | router |
| 6 | night stand | 17 | toilet light and ventilating fan | 43 | VCR |
| 7 | rice cooker | 18 | toilet seat with warm-water shower feature | 44 | IH |
| 8 | refrigerator | 20 | air cleaner | 45 | mobile recharger |
| 9 | microwave oven | 21 | vacuum cleaner | 48 | notebook PC |
| 10 | washing machine | 22 | dryer | | |
| 11 | living room light and kitchen light 2 | 24 | electric toothbrush | | |

As described above, each ST is composed of voltage and current sensors, a semiconductor relay, a ZigBee module, and a microcomputer which performs overall control of the components and internal processing. The microcomputer calculates consumed power from current and voltage waveforms measured by the voltage and current sensors and identifies a household electrical device from a small number of features representing characteristics of the voltage and current waveforms. There are two types of data to be received by the EoD control system according to the present invention: consumed power that is calculated at intervals of 0.5 seconds by the microcomputer of the ST, is held as data for each cycle (60 seconds) in an internal memory of the smart tap, and is transmitted to a server in a plurality of packets and a power request message that is transmitted from the ST when each device 20 requests power.

Although not shown, the priority apparatus includes a program storage area and a data storage area of memory. Programs such as a communication processing program, a power use plan setting program, an initial target value updating program, and a priority arbitration program are stored in the program storage area. Device property class data, message data, and the like are stored in the data storage area.

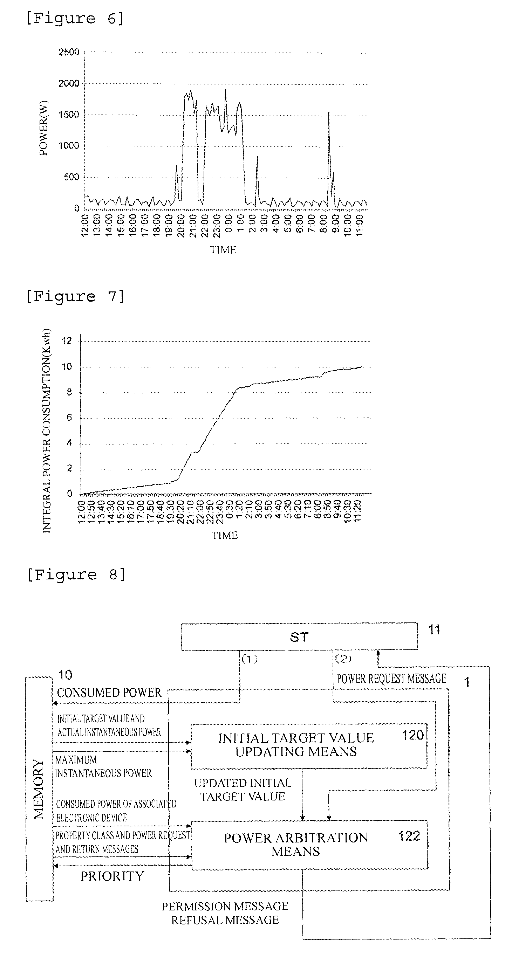

Figure 6 is a chart showing a graph of power consumed by devices in a certain house.

In Figure 6, the ordinate represents power (W) while the abscissa represents time. The graph shows consumed power in each of intervals of 10 minutes in one day. Note that the meaning of power heretofore referred to as consumed power is different from what the term "consumed power" generally means and that the defined term "instantaneous power" will be used hereinafter. The term instantaneous power refers to consumed power which is obtained by adding up consumed power for each of intervals of a minimum control interval $\tau$ (5 to 10 minutes) to obtain a total value and averaging the total value.

The graph shows that power is little used during daytime hours and is mainly used during a time period from 8 p.m. to 1 a.m. and that the instantaneous power has a value as high as 1900 W during the time period.

In Figure 7, the ordinate represents power consumption (KWh), and the abscissa represents time. The graph shows power consumption which is an accumulation of instantaneous power in each of intervals of 10 minutes in one day, and the value of the power consumption is 10.0 KWh.

The power consumption per household in Japan is 300 KWh per month and is about 10.0 KWh per day. The power consumption in Figure 7 is equal to the power consumption per household per month. Since the term instantaneous power is used in a different meaning from the general meaning of the term "consumed power," the meaning of an accumulation of power hereto referred to as power consumption is different from what the term power consumption generally means. Note that the defined term "integral power consumption" will be used.

Upper limits for usable power include an upper limit (hereinafter referred to as a "ceiling") for integral power consumption over a fixed period and an upper limit (hereinafter referred to as "maximum instantaneous power") for instantaneous power. The maximum instantaneous power is given as an upper limit for an instantaneous value of power in each time period in order for a user to reduce contract demand or in order to respond to a request for on-peak reduction from an electric power company for maintaining the balance between supply and demand in a power network. The ceiling is given as an upper limit for integral power consumption over a fixed period (e.g., one day, one week, or one month) in order for a user to reduce electricity costs and $CO_2$ emissions.

There are various patterns of power use indicating how much power a user spends in each time period. It is thus necessary to determine as a power use plan how much power can be used at each time in order to bring an instantaneous value and a cumulative value within the upper limits, from a predicted pattern of power use. If a user's pattern of power use is predicted, and a power use plan is determined from the pattern of power use with consideration to the upper limits, maintenance within the upper limits can be achieved while the QoL is maintained. Accordingly, a user's pattern of power use is predicted, a pattern of power use with the upper limits for an instantaneous value and a cumulative value determined is defined as a "power use plan" from the pattern of power use and is used below.

The power use plan will be described in the context of a specific example. Since instantaneous power has a value as high as 1900 W during hours from 8 p.m. to 1 a.m., as shown in the graph in Figure 6, the graphs in Figures 6 and 7 are estimated to be graphs of not the life pattern of an ordinary household but the life pattern of a one-person household.

As described above, a graph of the instantaneous power of all devices at home represents a transition in a certain pattern of power use. As for power required by a user through the user's daily life, each user has its own pattern of power use. The QoL can be guaranteed when the pattern is maintained. For example, assume that a user living in a pattern of power use in the graphs shown in Figures 6 and 7 has a 20-ampere contract with an electric power company. If the user uses various devices at one time, and the power consumed by the devices exceeds 2 KW, a breaker trips. Additionally, the power consumption increases by 10.0 KWh per day, which leads to an increase in electricity costs. If the user makes a plan to reduce the upper limits for an instantaneous value and a cumulative value by, e.g., 10% to avoid the problems, a plan which is set by reducing instantaneous power and integral power consumption on the basis of the user's pattern of power use is referred to as a "power use plan." A ceiling is 9.0 KWh, and maximum instantaneous power is 1.8 KW in the power use plan.

As described above, upper limits for power include a ceiling (an upper limit for cumulative power) over a fixed period and maximum instantaneous power (an upper limit for instantaneous power) at each time. There are various patterns of power use for respective users. In order to achieve maintenance within the upper limits, it is necessary to determine, as a power use plan, how much power can be used at each time. If a user's pattern of power use is predicted, and the power use plan is determined with consideration to the upper limits, maintenance within the upper limits can be achieved while the QoL is maintained. The power use plan determines used power for each fixed interval $\tau$ (set to 10 minutes in an experiment). The minimum control interval $\tau$ will be described.

For example, if an upper limit for consumed power for three days is set to 72 kWh, an upper limit for one day is 24 kWh, an upper limit for 12 hours is 12 kWh, and an upper limit for one hour is 1 kWh. An initial target value for the consumed power is calculated differently according to the length of a time interval, and the length of the time interval used to perform control depends on fineness of the control. A result of a demonstration experiment on the relationship between an upper limit for consumed power and the time interval $\tau$ shows that the time interval is preferably 5 to 10 minutes. The time interval $\tau$ will be referred to as the minimum control interval $\tau$ and can be arbitrarily set to between 5 and 10 minutes by a user. If the minimum control interval $\tau$ becomes equal to or more than 10 minutes, the interval is long. If a user wishes to use various devices, the user may be unable to use one(s) of the devices, and the QoL may be greatly impaired. The minimum control interval $\tau$ of 10 minutes or longer is thus not preferable. If the minimum control interval $\tau$ becomes equal to or less than 5 minutes, supplied power is changed on a moment-to-moment basis. For example, an unstable situation (e.g., a situation in which the brightness of a light bulb changes at all times, and the light bulb flickers) may occur. The minimum control interval $\tau$ of 5 minutes or shorter is thus not preferable. Calculating power to be consumed by each of all devices from the consumed power and processing the power is difficult because the volume of data is enormous.

(First Embodiment)

Figure 8 is a functional block diagram of a first embodiment showing functions of a priority apparatus shown in Figure 1.

Reference numeral 1 in Figure 8 denotes a priority apparatus; 10, a memory; and 11, an ST. The priority apparatus is composed of initial target value updating means 120 and power arbitration means 122. Reference characters (1) denote consumed power transmitted from the ST. As preprocessing, the priority apparatus converts the consumed power to a power use plan which determines used power for a minimum control interval τ and stores the power use plan, instantaneous power of an initial target value, and maximum instantaneous power in a memory 10, before the priority apparatus is activated. Reference characters (2) denote a power request message transmitted from the ST. The power request message is transmitted to the power arbitration means 122.

The initial target value updating means 120 has a function of allocating a difference between instantaneous power with an initial target value and actual instantaneous power to subsequent instantaneous power with an initial target value to calculate an updated initial target value such that the updated initial target value does not exceed maximum instantaneous power. The power arbitration means 122 has a function of comparing, with the updated initial target value, a total value of power consumed by a device having transmitted the power request message and devices in operation and, if the total value is larger, selecting a device having a priority of the minimum value among the devices obtained on the basis of electrical device property class data (to be described later) and selecting a device according to device property.

(Preprocessing)

As prior processing to be performed before activating the priority apparatus, a process of setting the power use plan is performed. The power use plan setting process will be described below.
The priority apparatus stores consumed power calculated at intervals of 0.5 seconds which has been transmitted from the ST in the memory and stores instantaneous power that is obtained by adding up the consumed power to obtain a total value and averaging the total value in the memory at intervals of the minimum control interval τ (5 to 10 minutes). A past record of a user's actual use of power (e.g., instantaneous power and integral power consumption for one week, one month, or each of four seasons, spring, summer, autumn, and winter) is set as a power use plan and is stored in the memory in advance.
An EoD control system according to the present invention sets a value determined by a user (e.g., a value reduced by 30%) as a target value using a pattern of power use that is a past record of a user's actual use of power and makes a power use plan in advance. The EoD control system determines its ceiling and maximum instantaneous power and performs power control. The EoD control system according to the present invention performs actual control using the ceiling and maximum instantaneous power.
Accordingly, the priority apparatus according to the present invention sets in advance a power use plan using instantaneous power for each time period derived from a past record of a user's actual use of power and can set the power use plan in more detail.
Power used by each device is transmitted to the priority apparatus at all times, and the priority apparatus accumulates the used power in the memory.

An example of the power use plan will be described below. A power use plan is determined using instantaneous power in each minimum control interval τ (set to 10 minutes in a demonstration experiment (to be described later)). Let C (Wh) be a ceiling (an upper limit for integral power consumption) set by a user; M(t) (W), maximum instantaneous power (an upper limit for instantaneous power); and D(t) (W), a predicted value for power demand at time t. An initial target value $T_0(t)$ (W) is created from Equations (1) and (2).

$$D'(t) = \begin{cases} D(t) & if\ D(t) \leqq M(t) \\ M(t) & otherwise \end{cases} \qquad (1)$$

$$T_0(t) = \frac{C}{\displaystyle\sum_{t_{start}}^{t_{end}} \tau\ D'(t)} D'(t) \qquad (2)$$

The priority apparatus controls each device according to the power use plan such that power of the initial target value $T_0(t)$ (W) falls below the maximum instantaneous power.

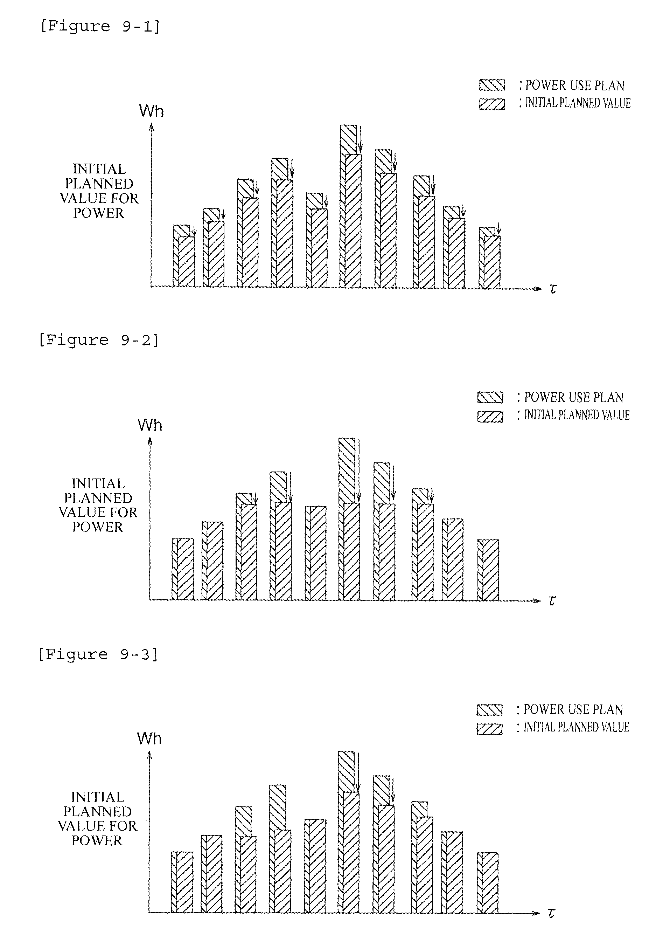

The initial target value $T_0(t)$ (W) that is the example of the power use plan is a plan for reducing a value at each time in a power use plan by a fixed percentage and setting initial target values such that the initial target values as a whole stay within upper limits (hereinafter referred to as a "fixed percentage reduction plan"). Figure 9-1 shows the example.
Examples for setting an initial target value are reducing only values during on-peak power use hours when used power is above instantaneous power of a power use plan for one day (hereinafter referred to as a "peak reduction plan" (Figure 9-2) and reducing values according to power costs (hereinafter referred to as a "cost reduction plan" (Figure 9-3). For example, if a reduction in power use during hours from 1 p.m. to 4 p.m. when most power is used is desired, power usage can be reduced by increasing the power costs for power usage during the time period. The reduction plans allows setting of initial target values, and initial target values can also be set using the reduction plans in combination. As described above, the priority apparatus can select a power use plan according to a reduction method required by a user.

As has been described above, as the prior processing to be performed before activating the priority apparatus, it is necessary to set a power use plan on the basis of a past record of a user's actual use of power and store in advance a ceiling and maximum instantaneous power as an initial target value which are obtained by reducing the power use plan using a reduction plan selected by the user in the memory. When the priority apparatus is activated, the initial target value updating means 120 (to be described later) performs a process (interval) of checking consumed power and updating an initial target value at fixed intervals ($\tau$) using the initial target value as a target, and the power arbitration means 122 is composed of means for performing a process (event driven) of arbitrating between a device and different devices in response to a request from the device. The means will be described below. Note that power used by each device is transmitted to the priority apparatus at all times, and data on the used power is accumulated.

(1) Initial Target Value Updating Means

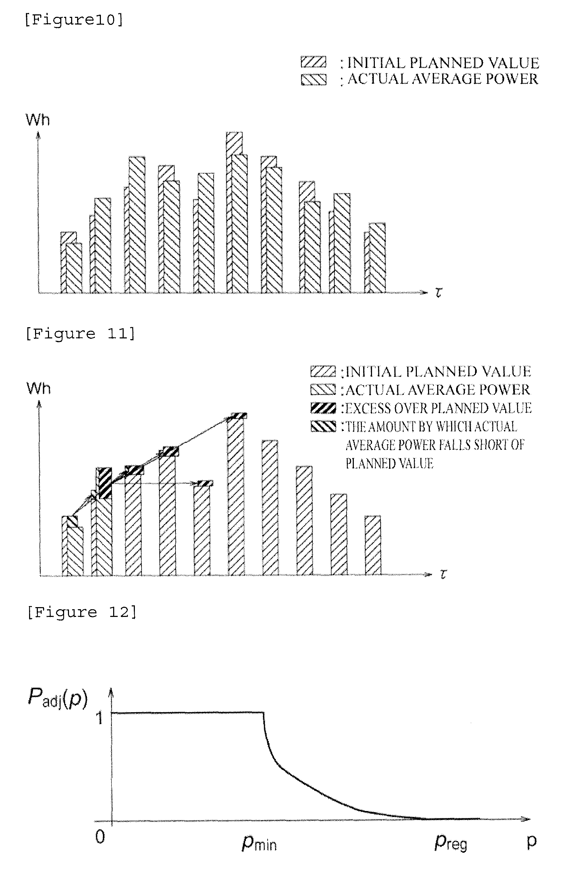

The initial target value updating means 120 for performing a process (interval) of updating an initial target value (for instantaneous power) at the minimum control intervals ($\tau$) on the basis of the initial target value will be described. When the priority apparatus is activated, control is performed using an initial target value for power per $\tau$ as a target at the time of actual power control. If a user acts differently from a past history, a reduction in power may be impossible in view of the QoL and the properties of devices in some cases. In such a case, actual instantaneous power temporarily exceeds an initial target value. In contrast, the number of devices to be used may be small, and actual instantaneous power may fall below an initial target value. Since devices are used by a person, actual instantaneous power depends on the person's behavior during use. If control is continued while initial target values are maintained in the cases, maintenance within upper limits cannot be finally achieved. Figure 10 is a bar chart showing an example of actual instantaneous power when control is performed while initial target values are maintained.

A case is conceivable where power cannot be reduced to (or to below) an initial target value in view of a user's status of use of a device (e.g., since control is performed while initial target values are maintained, power of only a device such as a respirator which cannot be stopped exceeds an initial target value at a certain moment. In this case, instantaneous power may temporarily exceed an initial target value as long as the instantaneous power does not exceed maximum instantaneous power. Initial target values are updated such that an excess at this time is absorbed in a subsequent part of a power use plan. Although initial target values deviate from initially determined values, maintenance within a ceiling can be achieved by feeding back a difference between actual instantaneous power and an initial target value to subsequent initial target values while maintaining the QoL.

An allocation function is defined for giving feedback to an initial target value. The allocation function receives a difference between an initial target value and actual instantaneous power, allocates the difference to initial target values for times later than a time for the difference, and calculates instantaneous power of a new initial target value. Figure 11 is an explanatory chart of a case where control that feeds back a difference between actual instantaneous power and an initial target value to subsequent planned values is performed. When the priority apparatus is activated, and a control start time reaches a time $t_{now}$ satisfying $t_{now}$ - start $\geq i\tau$, the priority apparatus updates a power use plan. If i := i + 1, a power use plan $T_i(t)$ represents a power use plan at time t after i updates, i.e., after a lapse of $i\tau$. Reference character $\gamma$ in Equation (3) denotes an allocation function for updating a power use plan, and the function allocates a difference between instantaneous power of an initial target value and actual instantaneous power to subsequent instantaneous power. Accordingly, differential power to be allocated to subsequent instantaneous power is determined by substituting the difference into Equation (3).

$$T_{i+1} := min(\gamma \ (\hat{T}_i(t_{now}) - \dot{E}(t_{now}), t_{now} - t_{start}) T_i(t), M)(3)$$

$$\dot{E}(t_{now}) = \sum_{t_{start}}^{t_{now}} \tau \ E_{total}(t) \qquad (4)$$

$$\hat{T}_j(t_{now}) = \sum_{t_{start}}^{j\cdot\tau} T_j(t) \qquad\qquad (5)$$

Reference characters $T_1(t_{now})$ in Equation (5) denote a current initial planned value, and reference characters $E(t_{now})$ denote current used power.

The chart shown in Figure 11 is obtained using a method (hereinafter referred to as an "equal difference allocation method") for equally dividing the difference and allocating a divided part to all of subsequent new initial target values. Another possible method is allocating the difference to only the one immediately succeeding instantaneous power (hereinafter referred to as an "instantaneous power allocation method"). As described above, difference allocation methods include the equal difference allocation method and instantaneous power allocation method. First, an overall power use plan is created. During actual control, an initial target value is updated so as not to exceed maximum instantaneous power to suit a status of use. This makes it possible to achieve maintenance within a ceiling while performing flexible control.

(3) Power Arbitration Means

The power arbitration means 122 for performing a process (event driven) of arbitrating between a device and different devices in response to a request from the device while maintaining the QoL, by prioritizing devices will be described.

A request for power from a device is issued at a time when a user wants to use the device, regardless of $\tau$ described above. Such requests include one issued by a device which can wait until the end of the minimum control interval $\tau$ of 5 to 10 minutes and one issued by a device which requires immediate supply of power. In the case of the latter device, control at the intervals $\tau$ causes a failure to supply power in time, which leads to a reduction in QoL. Power used by the power arbitration means upon receipt of a request for power is not instantaneous power but actual consumed power. With the use of actual consumed power, immediate decisions can be made in response to requests for power issued at various times, and whether to wait can be determined immediately.

The EoD control system requires a guide for determining to which one power is supplied when individual devices request power. Desired power cannot be supplied to all devices to achieve maintenance within upper limits, and which one of the devices requires power depends on the statuses of the devices and a user. Determination of to which device power is preferentially supplied matters. Accordingly, priority needs to be determined according to the property and status of a device. To this end, a priority function returning a value of 0 to 1 is set for devices, and power is preferentially supplied to one having a priority of a larger value. Note that QoL is enhanced when a device is supplied with power and is made available and that social contribution through a cost reduction and energy saving are not taken into account.

Since a power control method varies among devices, the properties of devices need to be known in advance in order to select a device for which supplied power is reduced in response to requests for power from the devices. A parameter representing the property of power requested by each device and a power control method for the device is denoted by QoEn. As for QoEn, devices are classified on the basis of the device power control methods below.

(1) Adjustable Device (based on whether power supplied during operation can be changed) (a set of devices as members is denoted by $A_{adj}$)
(2) Waitable Device (based on whether a device can wait to be supplied with power when the device is activated) (a set of devices as members is denoted by $A_{wait}$)
(3) Suspendable Device (based on whether power supply can be suspended during operation) (a set of devices as members is denoted by $A_{sus}$)

By combining the three types of power control methods, devices are classified into eight classes, as shown in Table 2. Respective pieces of data for eight classes are defined as "electrical device property class data" and are used. The priorities of devices are controlled using the electrical device property class data.

The eight classes are tied to device names identified by IDs in the "Home Appliance" column, and a device to which priority is to be given is determined using the priorities of devices in use. For example, when the priority apparatus receives a power request message from the ST, the priority apparatus determines whether to permit or refuse the request, using the priorities of a device having transmitted the message and devices in operation and the electrical device property class data.

(1) Devices classified as adjustable devices include one whose function can be used even if supplied power is slightly reduced during use. Examples of such devices include a dryer and a light bulb. (2) Some devices may not cause any functional problems even without immediate power supply in response to requests for power from the devices as long as power is supplied by a predetermined time. Examples of such devices include a rice cooker and a washing machine. (3) Some devices have little effect on the life of a user using the devices even if power supply is suspended during use. Examples of such devices include an air conditioner and a refrigerator.

Note that, for example, a respirator is classified into class 8 in order to ensure safe and comfortable living. Although devices are classified into the eight classes, classes to which the devices belong are not fixed and are not limited to the classes shown in Table 2. A user can arbitrarily determine into which class each device is to be classified. For example, if a bedridden elderly person selects an air conditioner as an always necessary device, the air conditioner is classified into class 8. In other words, devices including a gas detector, a respirator, and a network device (e.g., a router) as electrical devices which cannot be classified on the basis of the adjustable, suspendable, and waitable power control methods fall into class 8.

[Table 2]

| Class | Adjustable | Waitable | Suspendable | Home appliance (Electrical device ID) |
|-------|-----------|----------|-------------|----------------------------------------|
| 1 | YES | YES | YES | notebook PC and boiler |
| 2 | YES | YES | NO | toilet seat with warm-water shower feature and microwave oven |
| 3 | YES | NO | YES | heater, air conditioner, and refrigerator |
| 4 | YES | NO | NO | TV and dryer |
| 5 | NO | YES | YES | dishwasher and washing machine |
| 6 | NO | YES | NO | rice cooker and toaster |
| 7 | NO | NO | YES | copier and electric pot |
| 8 | NO | NO | NO | gas detector, respirator, and network device (e.g., router) |

1. Adjustable Device

A power-adjustable example is a dryer. As shown in Figure 12, the level of user satisfaction is highest when power as requested is supplied to a power-adjustable device and does not change much even if supplied power is slightly reduced. However, if the power is significantly reduced, the capability of the home appliance is restricted, and the level of user satisfaction decreases. When the power is finally reduced to below a certain level, the home appliance cannot fulfill its function. That is, priority can be given using a monotonically decreasing function with respect to supplied power, which makes the priority of supply of the minimum power required for use high and makes the priority of supply of power as requested low. Letting $p^{req}_a$ be power requested by a home appliance a; and $p^{min}_a$ be the minimum required power, the power arbitration means defines a priority $Pri_a^{dja}(p)$ of the power-adjustable home appliance as follows:

$$\mathrm{Pri}_a^{\mathrm{adj}}(p) = \begin{cases} 0 & \text{if } p_a^{\mathrm{req}} \leq p \\ 1 - \left(\frac{p_a^{\mathrm{req}} - p}{p_a^{\mathrm{req}} - p_a^{\mathrm{min}}}\right)^{\alpha_a^{\mathrm{adj}}} & \text{if } p_a^{\mathrm{min}}p < p_a^{\mathrm{req}} \\ 1 & \text{if } p \leq p_a^{\mathrm{min}} \end{cases} \qquad (6)$$

An example of the priority (adjust) of a power-adjustable device thus designed is as in Figure 12 and Equation (6).

2. Waitable Device

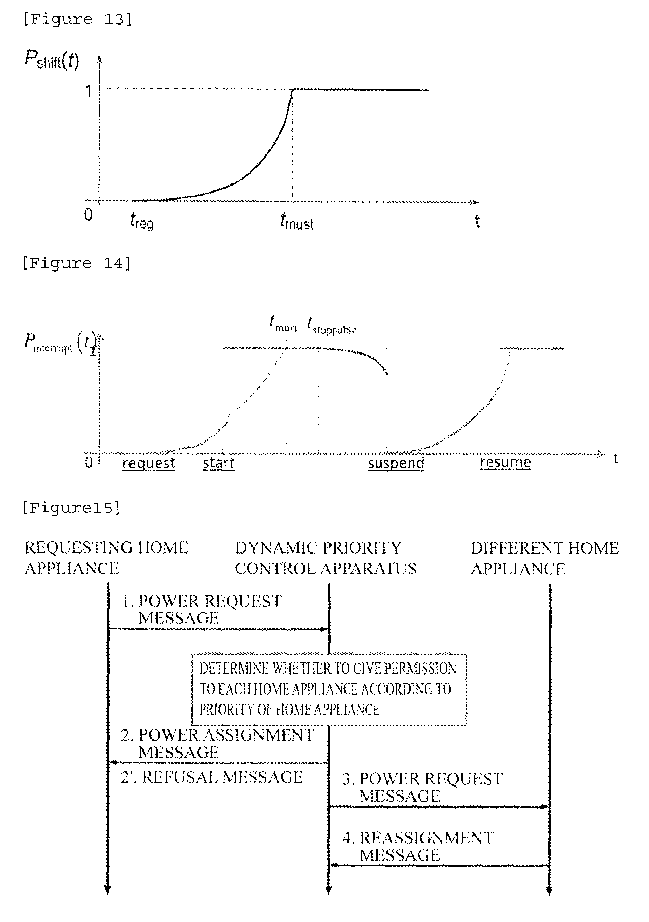

An example waitable at startup is a rice cooker. The rice cooker is a home appliance which only needs to complete operation by a certain time and whose startup time can be delayed. That is, as shown in Figure 13, priority may be defined so as to be low immediately after power is requested and increase as a time when the home appliance needs to be started up gets closer.

Letting $t^{req}_a$ be a requested time; and $t^{must}_a$ be a time when a waitable home appliance a needs to be started up, a

priority $\mathrm{Pri}^{\mathrm{shift}}_a(t)$ of the waitable home appliance a is defined as follows:

$$\mathrm{Pri}^{\mathrm{shift}}_a(t) = \begin{cases} 1 - \left(\dfrac{t - t^{\mathrm{req}}_a}{t^{\mathrm{must}}_a - t^{\mathrm{req}}_a}\right)^{\alpha^{\mathrm{shift}}_a} & \text{if } t \leq t^{\mathrm{must}}_a, \\ 1 & \text{if } t > t^{\mathrm{must}}_a \end{cases} \qquad (7)$$

3. Suspendable Device

A suspendable example is an air conditioner. A suspendable device is a home appliance which acts toward a certain steady state during operation and, once the steady state is reached, can maintain the steady state even after operation is suspended, like temperature setting of an air conditioner. Assume a case of such a home appliance. As shown in Figure 14, immediately after operation is started, the home appliance acts toward a steady state, and a high priority needs to be given. When the steady state is reached, since the steady state is maintained even if operation is suspended, the priority can be reduced. During the suspension, since the home appliance deviates from the steady state as time passes, the home appliance needs to resume operation with the increased priority. A priority $\mathrm{Pri}^{\mathrm{int}}_a(t)$ of the suspendable home appliance is defined separately for a case where a is in operation and a case where a is in abeyance as follows:

$$\mathrm{Pri}^{\mathrm{int}}_a(t) = \begin{cases} \mathrm{Pri}^{\mathrm{run}}_a(t) & \text{if } a \text{ is in operation} \\ \mathrm{Pri}^{\mathrm{sus}}_a(t) & \text{if } a \text{ is in abeyance} \end{cases} \qquad (8)$$

$$\mathrm{Pri}^{\mathrm{run}}_a(t) = \begin{cases} \left(\dfrac{t - t^{\mathrm{enable}}_a}{t^{\mathrm{stop}}_a - t^{\mathrm{enable}}_a}\right)^{\alpha^{\mathrm{run}}_a} & \text{if } t \leq t^{\mathrm{enable}}_a \\ 1 & \text{otherwise} \end{cases} \qquad (9)$$

$$\mathrm{Pri}^{\mathrm{sus}}_a(t) = \begin{cases} 1 - \left(\dfrac{t - t^{\mathrm{sus}}_a}{t^{\mathrm{must}}_a - t^{\mathrm{sus}}_a}\right)^{\alpha^{\mathrm{sus}}_a} & \text{if } t \leq t^{\mathrm{must}}_a \\ 1 & \text{otherwise} \end{cases} \qquad (10)$$

4. Priority of General Home Appliance

Generally, classes of home appliances are defined using a combination of the three properties shown in Table 2. By combining the priorities defined for the properties, the priority functions for the classes are defined as shown under the item of priority function in Table 3. For example, the priority function of class 1 is defined by the product of the priority functions corresponding to the respective properties as follows:

$$\mathrm{Pri}_a(t, p) = \mathrm{Pri}^{\mathrm{adj}}_a(p)\mathrm{Pri}^{\mathrm{shift}}_a(t)\mathrm{Pri}^{\mathrm{int}}_a(t) \qquad (11)$$

The priority function of class 8 is 1, which means that power is always preferentially supplied.

[Table 3]

| Class | Priority function $\mathbf{Pri}_a(\boldsymbol{p,t})$ |
|---|---|
| 1 | $\mathrm{Pri}^{\mathrm{adj}}_a(p) \cdot \mathrm{Pri}^{\mathrm{shift}}_a(t) \cdot \mathrm{Pri}^{\mathrm{int}}_a(t)$ |

(continued)

| Class | Priority function $Pri_a(p,t)$ |
|-------|--------------------------------|
| 2 | $Pri_a^{adj}(p) \cdot Pri_a^{shift}(t)$ |
| 3 | $Pri_a^{adj}(p) \cdot Pri_a^{int}(t)$ |
| 4 | $Pri_a^{adj}(p)$ |
| 5 | $Pri_a^{shift}(t) \cdot Pri_a^{int}(t)$ |
| 6 | $Pri_a^{shift}(t)$ |
| 7 | $Pri_a^{int}(t)$ |
| 8 | 1 |

Figure 15 is a sequence chart for explaining a procedure by which the priority apparatus supplies power according to priority in response to a power request message.

1. The ST connected to a device transmits a power request message to the priority apparatus (1).

2. The priority control apparatus 1 determines the priorities of the device having transmitted the power request message and a device in operation from a current suppliable amount and a home life pattern.

3. The priority control apparatus 1 transmits, in response, a power assignment message (2) including consumed power and time permitted to the device or a refusal message (2') for a device not permitted to be supplied with power according to the priority of the device. If the priority of the device in operation is low, and the device is desired to be stopped or power to the device is desired to be reduced, the priority control apparatus 1 transmits an interrupt message (3) to the device.

4. A device permitted to use power operates with permitted power for a permitted time period. A device for which power use is refused transmits a reassignment message after a fixed period of time (4).

With the procedure, a user can reduce power as much as he/she wants by setting the maximum suppliable power amount (a ceiling) by himself/herself.

The procedure will be described in detail. A device $a_{req}$ requiring power transmits a power request message (Table 3) to a server (1 in Figure 15). The server having received the request compares a sum $E'_{total}(t_{now})$ of total used power $E_{total}(t_{now})$ at a current time $t_{now}$ and requested power $E_{req}$ with a power use plan $T_i(t_{now})$ immediately. If the overall power $E'_{total}(t_{now})$ is below the plan, the server permits the power $E_{req}$ as requested (Equation (12)). If $a_{req} \in A_{wait}$, the server refuses the request (2' in Figure 15). Otherwise, the server calculates the priorities of devices. The server reduces the power for a different device lower in priority than the device $a_{req}$ as interrupt processing (3 in Figure 15) (Equation 13), secures power to update the total used power $E_{total}(t_{now})$, and decides to reduce supplied power according to the property of the device (Equation 14). The server transmits a message with information in Table 4 (e.g., suppliable power $E_{supply}$) to the device $a_{req}$ immediately, and the device uses power according to the message. A policy about power use is determined again for the device and the device $a_{req}$, for which power supply is refused/interrupted, in a next interval process (4 in Figure 15).

$$E_{supply} = \begin{cases} E_{req} & if \ E'_{total}(t_{now}) \leq T_i(t_{now}) \\ E_{refuse} & otherwise \end{cases} \qquad (12)$$

EP 2 667 473 A1

$$E_{refuse} = \begin{cases} 0 & if\ a \in A_{wait} \\ E_{adj} & else\ if\ a \in A_{adj} \\ E_{req} & otherwise \end{cases} \qquad (13)$$

$$E_{adj} = max(T_i(t_{now}) - E_{total}(t_{now}), E_{req}^{min}) \qquad (14)$$

$E_{req}^{min}$ : minimum startup power for requesting device)

As described above, the priority apparatus having received a request from each device compares the sum $E'_{total}(t_{now})$ of the total used power $E_{total}(t_{now})$ in operation at the current time $t_{now}$ and the requested power $E_{req}$ with the power use plan $T_i(t_{now})$. If the total used power $E'_{total}(t_{now})$ is above the power use plan $T_i(t_{now})$, the priority apparatus reduces the power for a device $a_{min}$ with a minimum priority according to Equation 13 and gives a priority update.

Data of a power request message which the ST transmits to the priority apparatus will be described with reference to Table 4.

Pieces of data in the Value column and the Class in need column are tied to each of the items, device ID, requested power, minimum startup power, suspendable time period, and required startup time period in the Item column. The ST transmits pieces of data as sets of a value and a class in need to the priority apparatus.

[Table 4]

| Item | Value | Class in need |
|---|---|---|
| Electrical device ID | ID | 1-8 |
| Requested power | Ereg(W) | 1-8 |
| Minimum startup power | Emin(W) | 1-4 |
| Suspendable time period | Time | 1,3,5,7 |
| Required startup time | Time | 1,2,5,6 |

Data of a message which the priority apparatus transmits to the ST in response will be described with reference to Table 5.

A piece of data in the Value column is tied to each of the items, device ID, message type, permitted instantaneous power, and permitted use time period in the Item column. The priority apparatus transmits the pieces of data to the ST.

[Table 5]

| Item | Value |
|---|---|
| Device ID | ID |
| Message type | permission/refusal |
| Permitted average power | $E_{supply}$(W) |
| Permitted use time period | Time |

The dynamic priority control means 1 composed of the initial target value updating means 120 and power arbitration means 122 described above can avoid power saving by a reduction in integral power consumption and a massive blackout during on-peak hours without causing a situation in which instantaneous power exceeds its upper limit or integral power consumption exceeds its upper limit C (Wh).

(Second Embodiment)

The above-described dynamic priority control apparatus 1 can finally control instantaneous power to (or to below) maximum instantaneous power and perform control so as to maintain integral power consumption within the upper limit C (Wh). However, an unexpected increase in instantaneous power may occur due to, e.g., a load change during use of a device, and instantaneous power may exceed the maximum instantaneous power. A second embodiment for coping with such a case will be described.

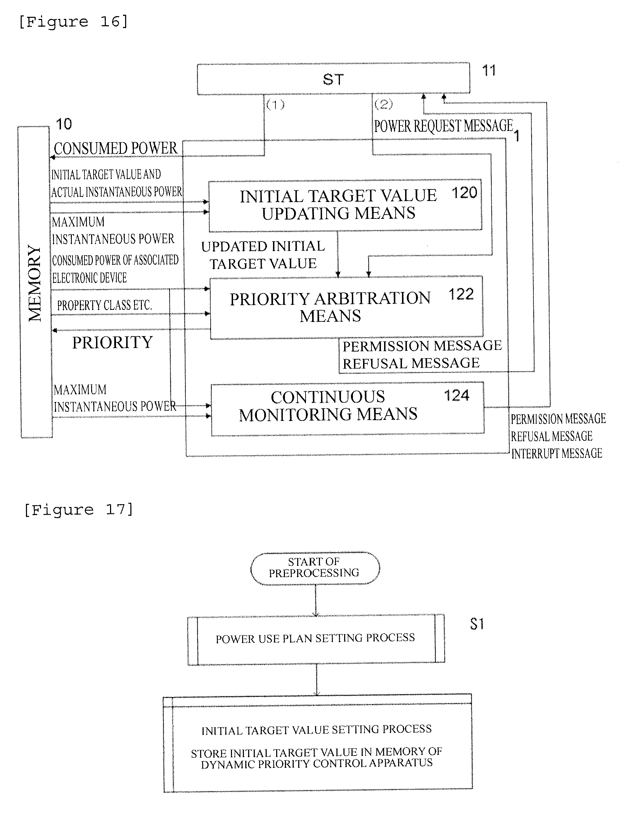

Figure 16 is a functional block diagram of the second embodiment.

A priority apparatus is composed of initial target value updating means 120, power arbitration means 122, and continuous monitoring means 124.

The initial target value updating means 120 and power arbitration means 122 have the same functions as the means described above, and a description thereof will be omitted.

The continuous monitoring means 124 monitors consumed power at all times. If the overall consumed power exceeds maximum instantaneous power for a certain time period d (about 0.5 to 2 seconds) or longer, the power arbitration means 124 performs arbitration based on priority such that the overall consumed power falls below the maximum instantaneous power, i.e., the overall consumed power falls below maximum instantaneous power M instead of the overall consumed power without waiting for a lapse of $\tau$.

The former priority apparatus maintains the QoL by immediately making a decision about a request for power transmitted from a device when, for example, the device is turned on and not interfering with use of the device. The latter priority apparatus updates a planned value and performs arbitration between devices in response to a request for continuation from each device. If supplied power is continuously changed on a moment-to-moment basis, an unstable situation (e.g., the brightness of a light bulb changes at all times, and the light bulb flickers) may occur. Overall stabilization is ensured by introduction of the minimum control interval $\tau$. Maintenance within maximum instantaneous power is guaranteed by monitoring instantaneous power at all times for an excess over the maximum instantaneous power.

Figure 17 is a general flow chart showing preprocessing of a CPU 1a before the priority apparatus is activated. Before the CPU 1a of the priority apparatus is activated, a process of setting initial target values of a power use plan and storing the initial target values in a memory is performed as the preprocessing in step S1.

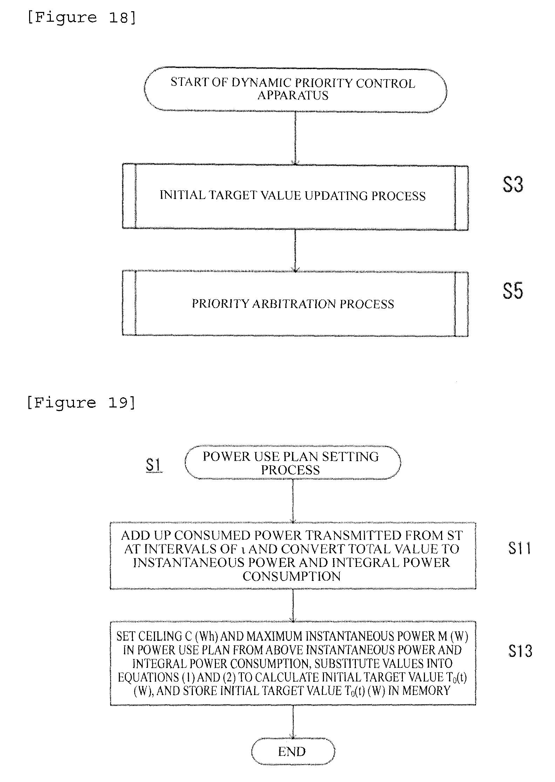

Figure 18 is a flow chart showing overall processing of the CPU 1a after the CPU 1a of the priority apparatus is activated. After the CPU 1a of the priority apparatus is activated, the CPU 1a performs an initial target value updating process in step S3 and a priority arbitration process in step S5.

Figure 19 is a flow chart of the power use plan setting process in step S1 described above.

As shown in Figure 19, the CPU 1a converts consumed power for, e.g., one day, one week, or one month transmitted from an ST of each device to instantaneous power which is obtained by adding up consumed power for each of intervals of the minimum control interval $\tau$ (e.g., 10 minutes) to obtain a total value and averaging the total value and integral power consumption in step S11. Letting C (Wh) be a ceiling (an upper limit for instantaneous power) set by a user from the instantaneous power and integral power consumption; M(t) (W), maximum instantaneous power (an upper limit for instantaneous power); and D(t) (W), a predicted value for power demand at time t, an initial target value $T_0(t)$ (W) which is an example of a power use plan is created from Equations (1) and (2) in step S13.

$$D'(t) = \begin{cases} D(t) & if \ D(t) \leq M(t) \\ M(t) & otherwise \end{cases} \quad (1)$$

$$T_0(t) = \frac{C}{\displaystyle\sum_{t_{start}}^{t_{end}} \tau \ D'(t)} D'(t) \quad (2)$$

As the preprocessing before activation, the initial target value $T_0(t)$ (W) is stored in the memory in advance.

Other power use plans include a peak reduction plan (Figure 9-2) in which values are reduced only during on-peak power use hours when power usage is above instantaneous power of a power use plan for one day and a cost reduction plan (Figure 9-3) in which values are reduced according to power costs. The reduction plans allow setting of initial target values, and initial target values can also be set using the reduction plans in combination.

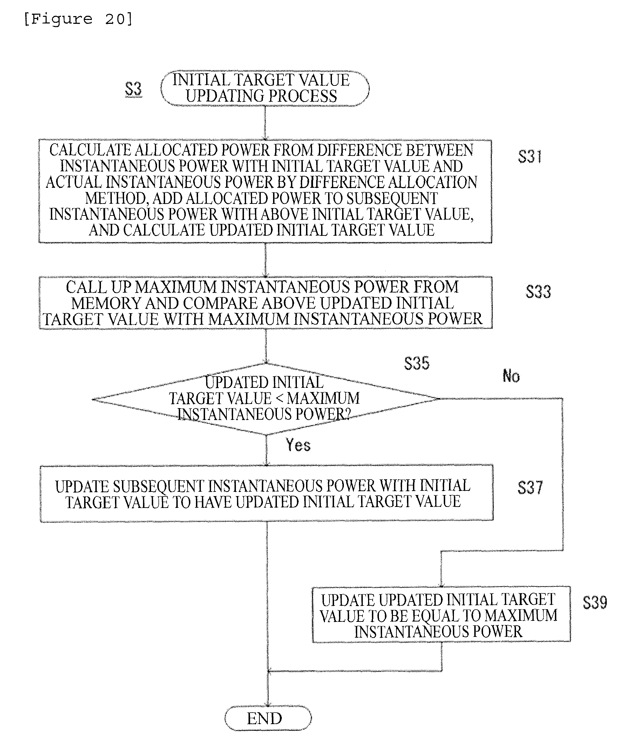

Figure 20 is a flow chart of the initial target value updating process in step S3 described above.

As shown in Figure 20, the CPU 1a calculates allocated power from a difference between instantaneous power of an initial target value and actual instantaneous power by a difference allocation method (an equal difference allocation method or an instantaneous power allocation method), adds the allocated power to subsequent instantaneous power with the initial target value, and calculates an updated initial target value in step S31. The CPU 1a compares maximum instantaneous power with the updated initial target value in step S33. If Yes in S35, the CPU 1a updates the subsequent instantaneous power with the initial target value to have the updated initial target value in step S37. If No in S35, the CPU 1a updates the initial target value to be the maximum instantaneous power and sets the maximum instantaneous power as the updated initial target value in step S39.

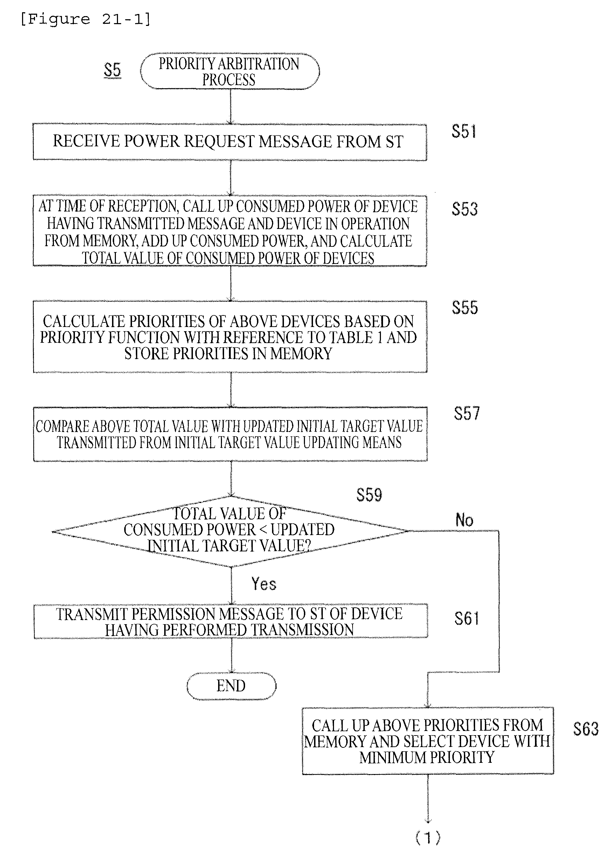

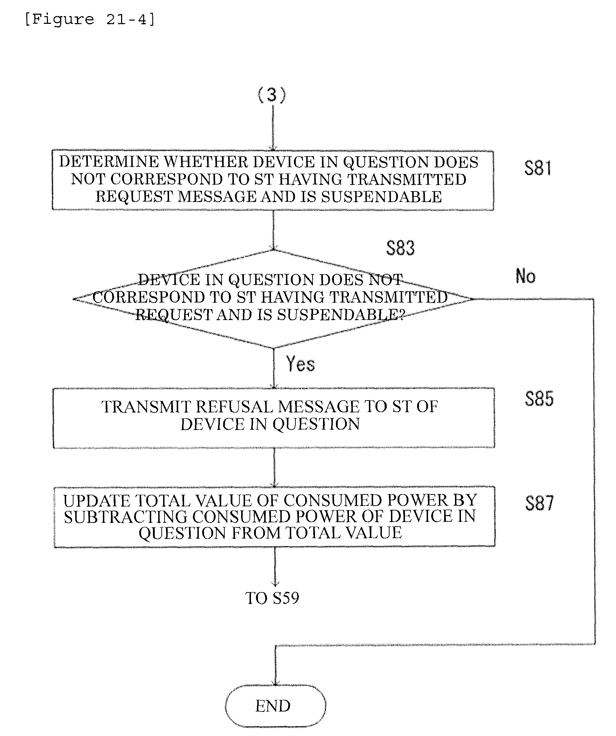

Figures 21-1 to 21-4 are flow charts of the priority arbitration process in step S5 described above.

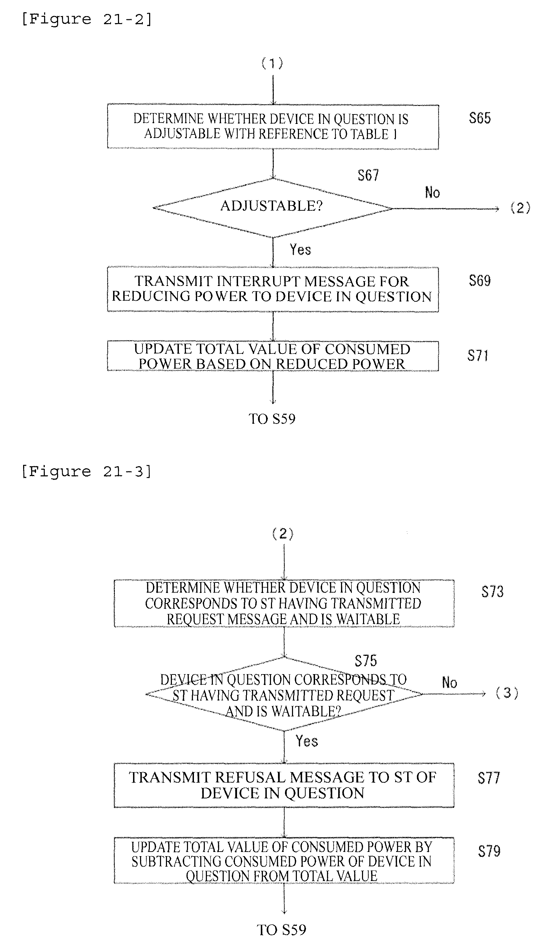

As shown in Figure 21-1, when the CPU 1a receives a power request message from an ST in step S51, the CPU 1a calls up the consumed power of a device having transmitted the power request message and devices in operation for a time when the power request message is received from the memory in step S53, adds up the consumed power of the devices, and obtains a total value. In step S55, the CPU 1a refers to Table 2, calculates the priorities of the devices on the basis of priority functions, and stores values of the priorities in the memory. The CPU 1a compares the total value with an updated initial target value transmitted from the initial target value updating means in step S57. If Yes in step S59, the CPU 1a transmits a permission message to the ST of the device having performed transmission in step S61 and ends the process. If No in step S59, the CPU 1a calls up the priorities from the memory and selects a device with the minimum priority in step S63 and advances to step S65. As shown in Figure 21-2, the CPU 1a refers to Table 2 and determines whether the device is adjustable in step S65. If Yes in step S67, the CPU 1a transmits an interrupt message for reducing power to the device in step S69, updates the total value of the consumed power on the basis of the reduced power in step S71, and returns to step S59. If No in step S67, the CPU 1a advances to step S73.

As shown in Figure 21-3, the CPU 1a determines whether the device corresponds to the ST having transmitted the request message and is waitable in step S73. If Yes in step S75, the CPU 1a transmits a refusal message to the ST of the device in step S77, updates the total value of the consumed power by subtracting the consumed power of the device from the total value in step S79, and returns to step S59. If No in step S75, the CPU 1a advances to step S81. As shown in Figure 21-4, the CPU 1a determines whether the device does not correspond to the ST having transmitted the request message and is suspendable in step S81. If Yes in step S83, the CPU 1a transmits a refusal message to the ST of the device in step S85, updates the total value of the consumed power by subtracting the consumed power of the device from the total value in step S87, and returns to step S59. If No in step S83, the CPU 1a ends the process.

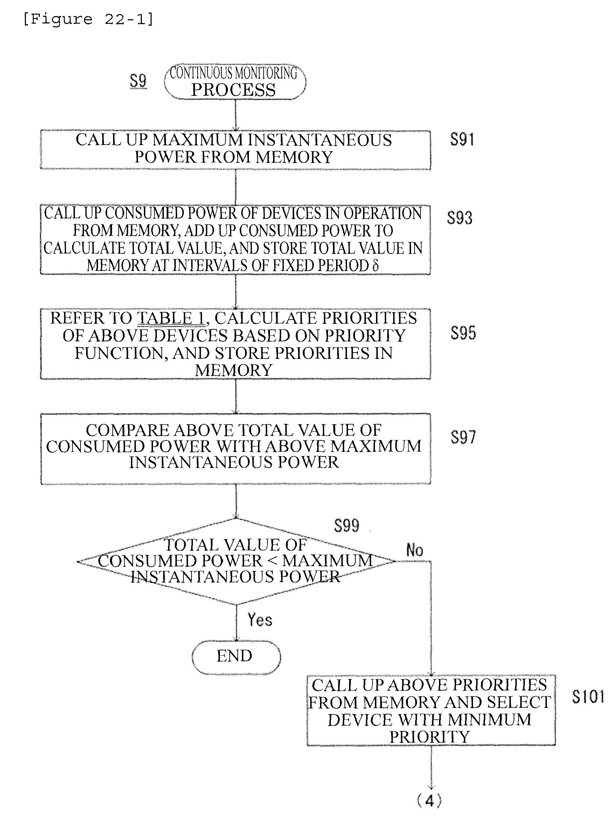

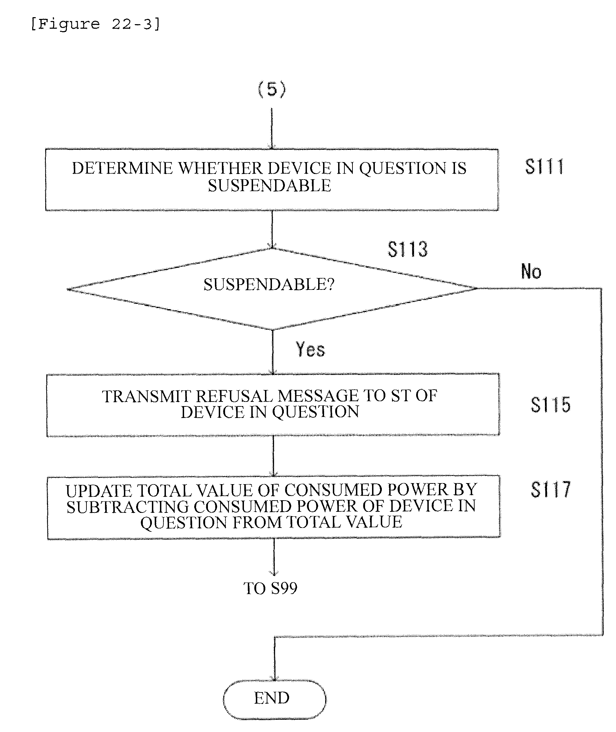

Figures 22-1 to 22-3 are flow charts of the continuous monitoring process in step S7 described above.

As shown in Figure 22-1, the CPU 1a calls up maximum instantaneous power from the memory in step S91. The CPU 1a calls up the consumed power of devices in operation from the memory, adds up the consumed power of the devices, and obtains a total value at intervals $\delta$ (0.5 to 2 seconds) in step S93. The CPU 1a refers to Table 2, calculates the priorities of the devices on the basis of priority functions, and stores the priorities in the memory in step S95. The CPU 1a compares the maximum instantaneous power with the total value of the consumed power in step S97. If the CPU 1a determines that the total value of the consumed power is smaller in step S99, the CPU 1a ends the process. On the other hand, if the CPU 1a determines that the total value of the consumed power is larger in step S99, the CPU 1a calls up the priorities from the memory and selects a device with the minimum priority in step S101, and advances to (4).

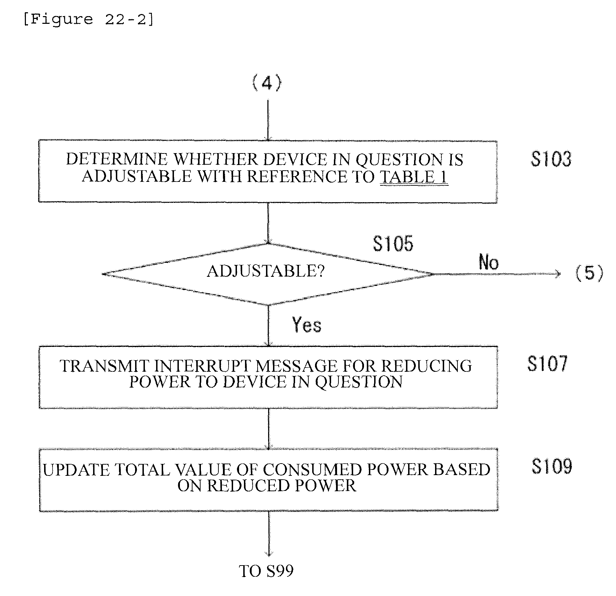

As shown in Figure 22-2, the CPU 1a refers to priority class data in Table 2 and determines whether the device is adjustable in step S103. If Yes in step S105, the CPU 1a transmits an interrupt message for reducing power to the device in step 107. The CPU 1a updates the total value of the consumed power on the basis of the reduced power in step S109 and returns to step S99. The loop is executed repeatedly until the total value of the consumed power becomes smaller than the maximum instantaneous power. If No in step S105, the CPU 1a advances to (5).

As shown in Figure 22-3, the CPU 1a determines whether the device is suspendable in step S111. If Yes in step S113, the CPU 1a transmits a refusal message to an ST of the device in step S115, updates the total value of the consumed power by subtracting the consumed power of the device from the total value in step S117, and returns to step S113. The loop is repeatedly executed until the total value of the consumed power becomes smaller than the maximum instantaneous power.

As can be seen from the configuration in which the loop is repeatedly executed until the total value of the consumed power becomes smaller than the maximum instantaneous power, the priority apparatus controls supply of power to electrical devices such that the power is always below maximum instantaneous power.

As can be seen from the procedure in step S51 to step S87 of the power arbitration means and the device property class data, the priority apparatus is targeted at all devices installed in households and offices. Even if devices with three types of properties are not all installed (e.g., an adjustable device is not installed), a ceiling and an upper limit for maximum instantaneous power are not exceeded.

As described above, the used power of devices is transmitted to the priority apparatus at all times, and the priority apparatus accumulates the used power in the memory. Integral power consumption over a fixed period (e.g., one day, one week, or one month) is obtained by cumulating the accumulated used power of the devices. Since the power arbitration means controls power supply to the electrical devices such that a predicted value $T_0(t)$ (W) for power demand in Equation (2) above is met, an upper limit (ceiling) for the integral power consumption is not exceeded.

For ease of comprehension of the priority arbitration process illustrated by the priority arbitration process flow chart in Figures 21, the process will be described in the context of an example.

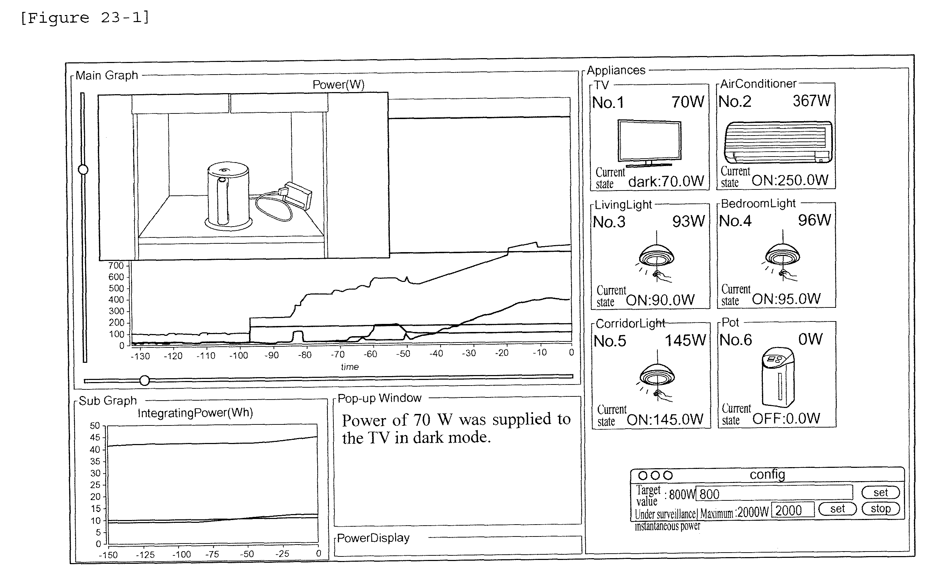

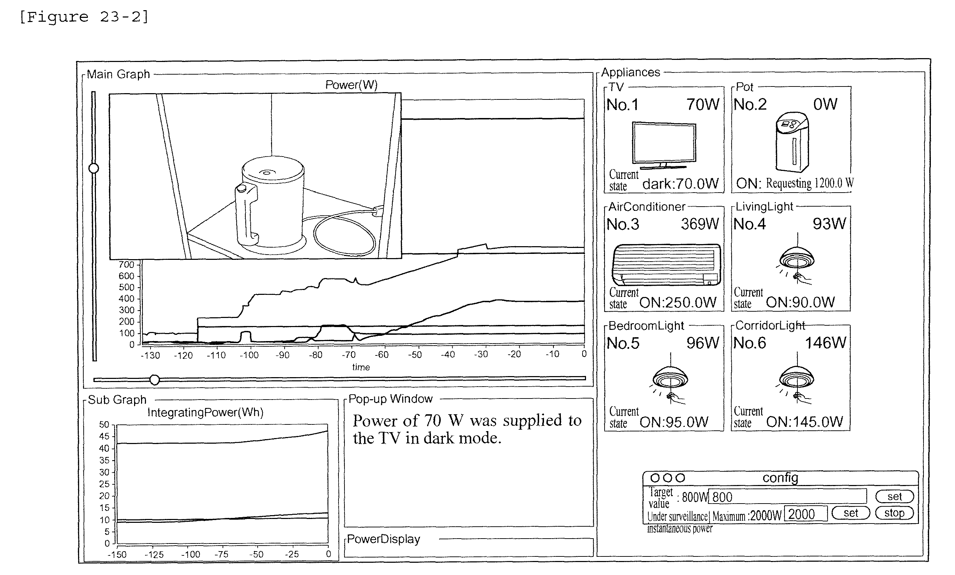

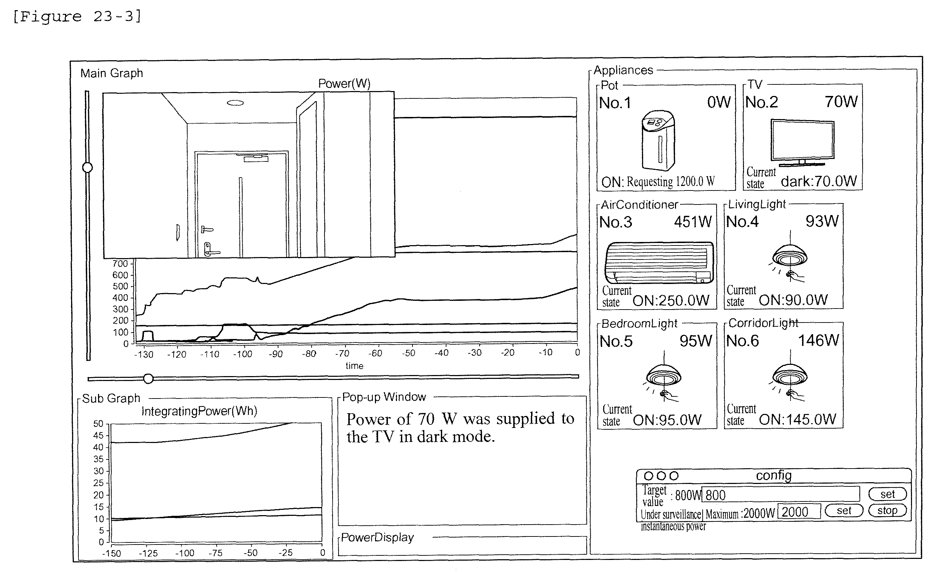

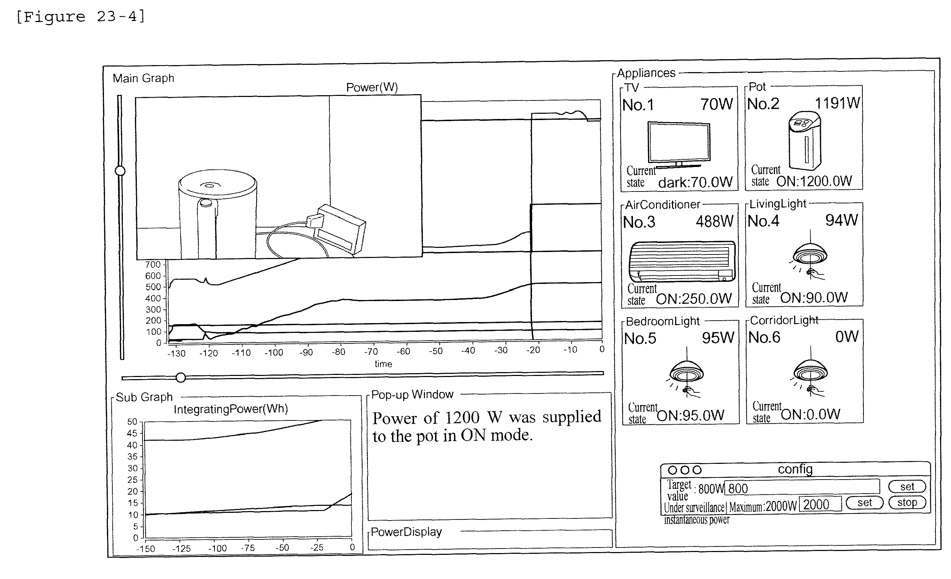

Figures 23 are explanatory views for explaining processing by the power arbitration means.

First, a priority arbitration process according to the example will be described using six types of devices, a TV (1), an air conditioner (2), a pot (4), a living room light (11), a bedroom light (12), and a corridor light (15), among devices installed in a model house shown in Figure 5. Accordingly, the example is an example using only the light (15) installed in a corridor, the TV (1) installed in a living room, the air conditioner (2), the pot (4), the living room light (11), and the light (12) installed in a bedroom. The numerals represent the positions of switches at which the devices are installed or arranged.

(Example of Power Arbitration Means)

In the example, an initial target value for power is set to 800 W, maximum instantaneous power is set to 2 KW, only the pot is OFF, and the pot requires power of 1.2 KW. The example is an example showing how the priorities of the devices change and processing to be performed by the power arbitration means to secure power of 1.2 KW for the port during the change, when the 1.2 KW pot is turned on under the set conditions.

Figure 23-1 is a view showing the power status of each device before the pot is turned on. The term "No" displayed on the right side of Figure 23-1 indicates the priority rank of each device, and a smaller value represents a higher priority. Only the pot is off, the other devices are operating, and the total of the power of the devices is 771 W.

Figure 23-2 shows a situation in which the pot has been turned on and is requesting power of 1.2 KW. The requested power of 1.2 KW, however, is above the initial target value of 800 W and almost causes excess (1.974 KW) over the maximum instantaneous power of 2 KW. For this reason, the request for power is not permitted, and the pot is kept waiting until the pot reaches first place in the priority ranking. Figure 23-3 shows that the pot has moved up gradually to reach first place in the priority ranking. Referring to Figure 23-4, since the pot has reached first place in the priority ranking, the pot (1200 W) is turned on after the light (No. 6) in a hallway with a minimum priority is turned off. It can be seen that although the total power of the devices is above the initial target value of 800 W, the total power is 1928 W and is not above the maximum instantaneous power of 2 KW.

As can be seen from the example of the pot whose consumed power is 1.2 KW, activating the 1.2 KW pot requesting power without stopping the TV and air conditioner can be implemented without impairing the QoL of an ordinary person. This is because the power arbitration means instantaneously calculates the priorities of devices and a device to be preferentially selected is determined on the basis of the priorities and the properties of the devices.

(Effectiveness of EoD Control System)

It will be demonstrated that an EoD control system according to the present invention can implement considerable power saving without impairing the QoL through actual life.

Three subjects A, B, and C were subjected to a QoL demonstration experiment in the same smart apartment.

The living experiment used the smart home appliances and conventional home appliances below.

• Smart Home Appliances (Network-Based Power Control)

Lights (in a living room and a bedroom), a television, an air conditioner, a microwave oven, a washing machine, a humidifier, a heater, and a rice cooker

• Conventional Home Appliances (Power Control Based on Smart Tap)

Lights (in a hallway, a kitchen, a washroom, a toilet, and a bathroom), an electromagnetic cooker (IH), a refrigerator, an electric pot, and a toilet seat with a warm-water shower feature

(Experiment Description)

• Each subject spent a daily life without power saving and learned a standard pattern of consumed power.
• The subject spent a life in which integral power consumption for one day was 10% lower than the standard pattern and a life in which integral power consumption for one day was 30% lower.
• Obtained data were numerically analyzed, and effects of the lives with reduced power on QoL were evaluated.

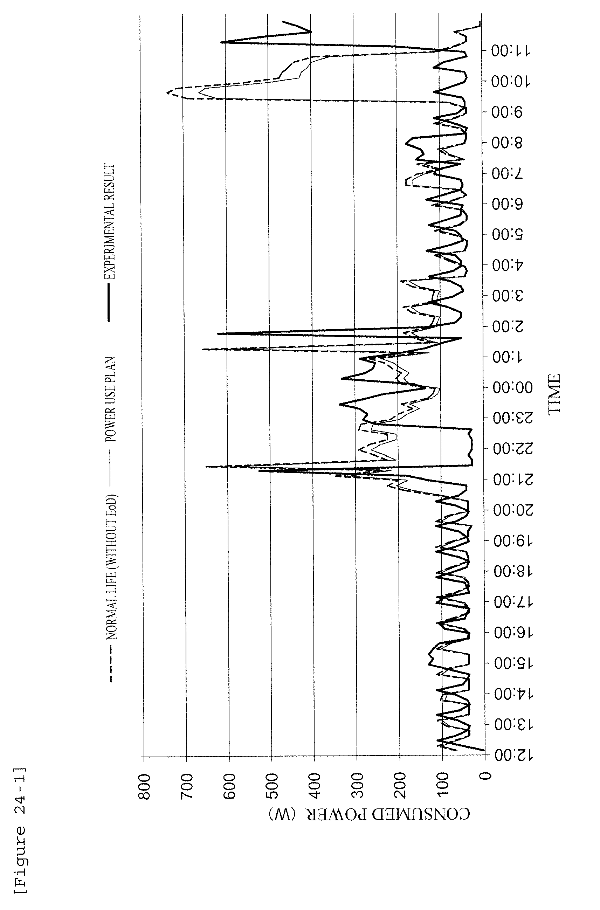

Figure 24-1 is a chart showing a pattern of consumed power at the time of normal use and respective patterns of instantaneous power in a power use plan and an experimental plan with a 10% reduction by a priority apparatus.

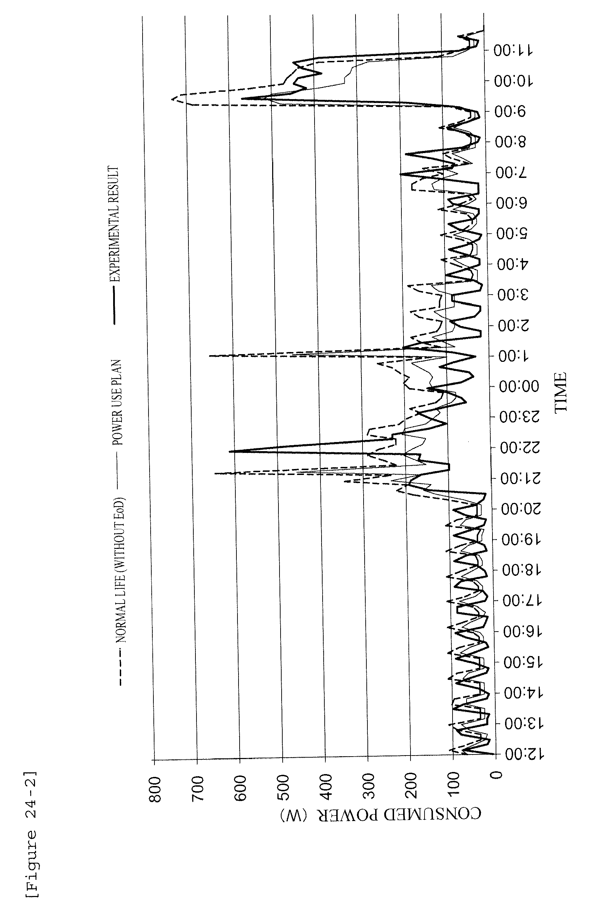

Figure 24-2 is a chart showing a pattern of consumed power at the time of normal use and respective patterns of instantaneous power in a power use plan and an experimental plan with a 30% reduction by the priority apparatus.
Figures 24-1 and 24-2 show that the conventional pattern of consumed power and the patterns of instantaneous power in the cases of a 10% reduction and a 30% reduction are similar and that an upper limit in the conventional pattern of consumed power is not exceeded.

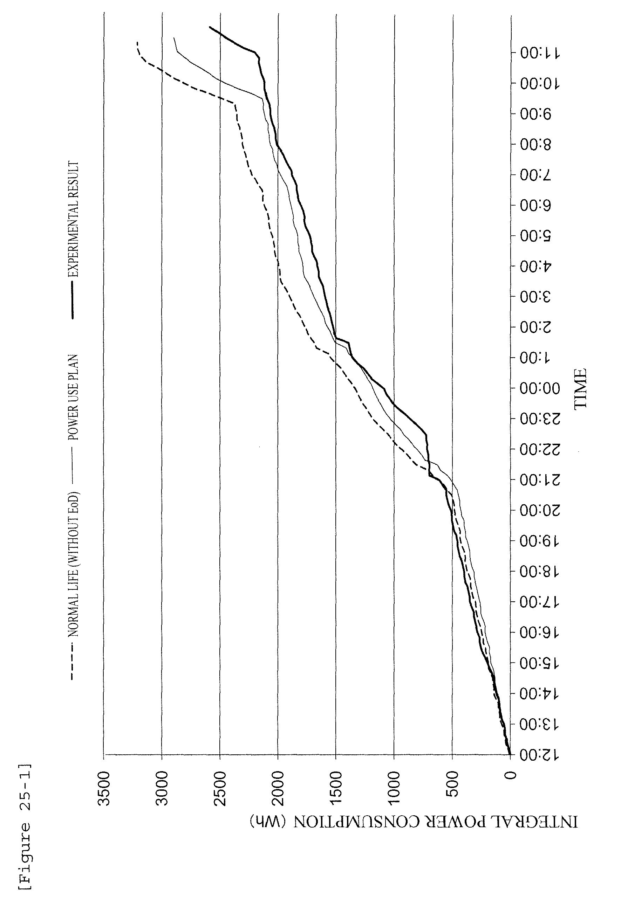

Figure 25-1 is a chart showing integral power consumption at the time of normal use and integral power consumption in the power use plan and the experimental plan with a 10% reduction by the priority apparatus.

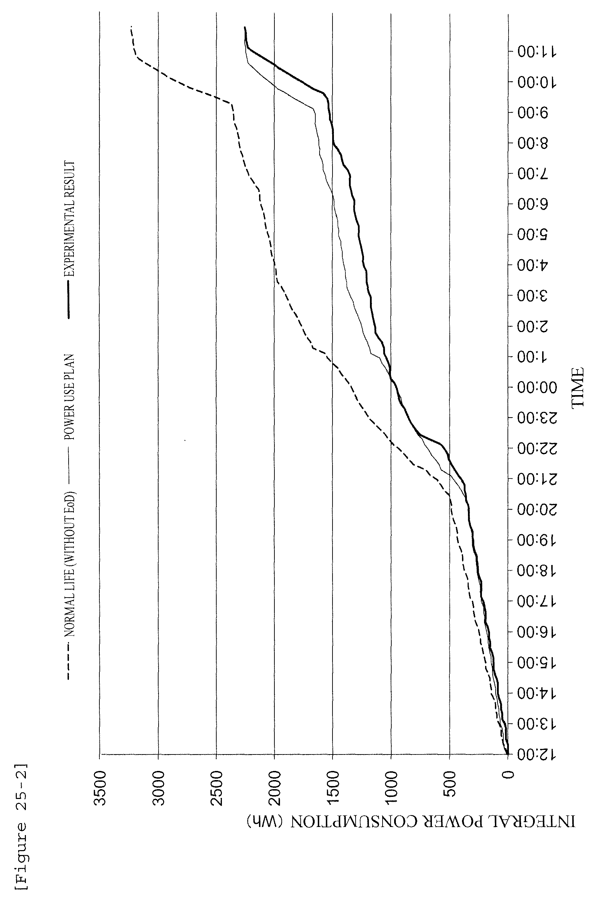

Figure 25-2 is a chart showing the integral power consumption at the time of normal use and integral power consumption in the power use plan and the experimental plan with a 30% reduction by the priority apparatus.
In both of the 10% and 30% reduction cases, integral power consumption at the time of normal use, integral power consumption based on an initial target value, and integral power consumption based on actually used power are mostly ranked in that order from highest to lowest. Figures 25-1 and 25-2 show that an upper limit for conventional integral power consumption is not exceeded.
Values in Figures 24 and 25 show that consumed power and integral power consumption are reduced even without changing the pattern of a daily life.
We listened to the actual life experience of the three subjects and checked whether there was any problem in the smart apartment where the EoD control system was installed.

(Actual Life Experience of Three Subjects)

• Subjects A, B, and C

Overall, they could live without any particular inconvenience, regardless of rate of power reduction.

• Subject A

He/she was conscious of a power reduction life only when the lighting was poor or the picture on the TV screen was not bright enough and cared no longer about the power reduction life when he/she got used to it.

• Subject B

He/she was conscious only when the electric pot was slower in boiling water and cared no longer about the power reduction life when he/she got used to it.

• Subject C

He/she reduced power for home appliances other than those for cooking at the peak of cooking.
It was found from the actual life experience of the three subjects that a person could live without any particular inconvenience, regardless of rate of power reduction (10% or 30%).

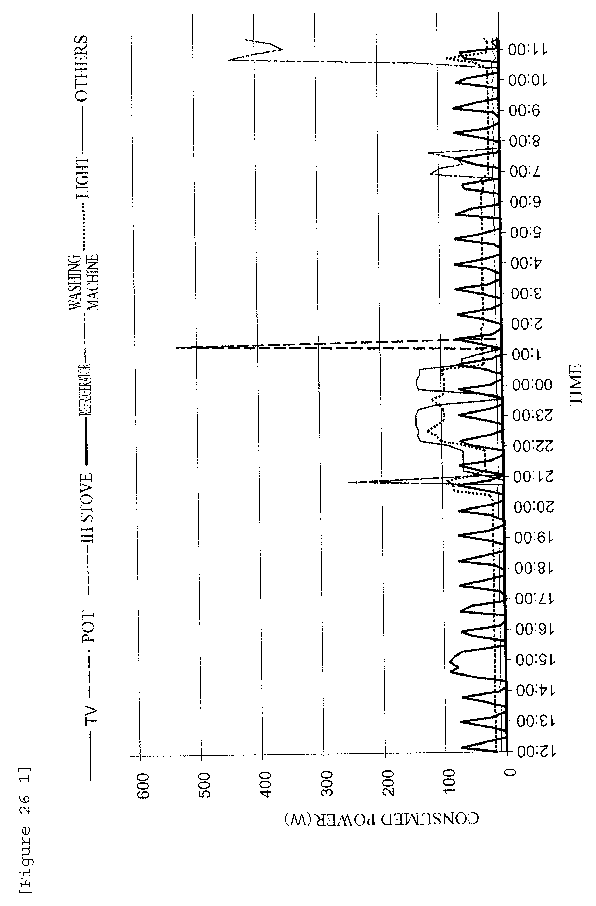

Figure 26-1 is a chart showing the instantaneous power of six types of devices in the experimental plan with a 10% reduction by the priority apparatus.

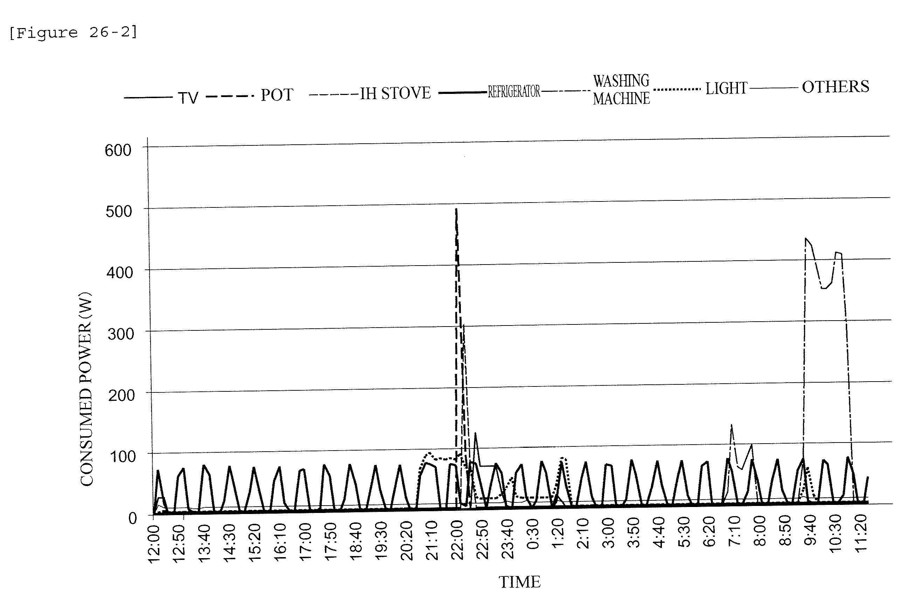

Figure 26-2 is a chart showing the instantaneous power of the six types of devices in the experimental plan with a 30% reduction by the priority apparatus.
The six types of devices are a TV, an electric pot, an electromagnetic cooker (IH stove), a refrigerator, a washing machine, and a light.
Figures 26 are charts showing graphs of instantaneous power for the six types of electrical devices in respective power use plans with 10% and 30% reductions.
In the 10% reduction case in Figure 26-1, the consumed power of the electric pot and washing machine peak at 1:30 and 11:00, respectively. In contrast, in the 30% reduction case in Figure 26-2, the consumed power of the electric pot and washing machine peak at 22:00 and 9:40, respectively. It can be seen that the peak time for the electric pot is about three hours and a half earlier, and the peak time for the washing machine is about an hour and forty minutes earlier.

(Conclusion)

An EoD control system according to the present invention is a system for supplying power on the basis of arbitration through exchange of messages between a device and a priority apparatus. When a user turns on a device, power is supplied after a lapse of 2 to 3 seconds, to which a refresh timer counts, in the supply/demand arbitration system in Patent Literature 2. In contrast, according to the present invention, power is instantaneously supplied after the steps 1) to 4) below.

1) A device transmits a "power request message" with requested power and a priority to a priority apparatus.
2) The priority apparatus performs arbitration to determine whether to supply power to the device and supplied power on the basis of the priority of the device at the time.
3) The priority apparatus transmits a "power assignment (permission/reduction/refusal) message" to the device according to a result of the arbitration.
4) The device having received the "power assignment message" operates according to the message.

The EoD control system is targeted only at commercial power sources, and power can be generally used as much as a user likes within contract demand. The EoD control system provides, as parameters which can be set by a user himself/herself, two upper limits, an upper limit for instantaneous power (maximum instantaneous power) and an upper limit for integral power consumption (a ceiling). By giving the maximum instantaneous power as an upper limit for used power for each time period, it is possible to respond to a request for a reduction in contract demand from a user or a request for on-peak reduction from an electric power company for maintaining the balance between supply and demand in a power network. The ceiling given as an upper limit for integral power consumption over a fixed period (e.g., one day, one week, or one month) allows a user to reduce electricity costs and $CO_2$ emissions. The EoD control system adopts 1) dynamic device priority for determining to which device power is supplied and for which device power is reduced in order to reduce power while maintaining the Quality of Life, 2) power use plan setting means for processing instantaneous power in order to achieve a ceiling and an upper limit for maximum instantaneous power on the basis of a life pattern of an ordinary person, 3) power arbitration means for processing consumed power in order to supply power in real time in response to a request for power from a device, and 4) continuous monitoring means for processing instantaneous power in order to prevent instantaneous power from increasing unexpectedly due to, e.g., a load change and exceeding maximum instantaneous power. It can be seen that this adoption allows the EoD control system to solve all of the conventional problems.

## Claims

1. An on-demand power control system comprising a commercial power source, a plurality of electrical devices, a smart tap connected to the electrical devices, a dynamic priority control apparatus which includes a memory and controls power supply to the electrical devices, and a network to which the dynamic priority control apparatus is connected via the smart tap,
   wherein the dynamic priority control apparatus includes initial target value updating means for allocating a difference between instantaneous power with an initial target value and actual instantaneous power to subsequent instantaneous power with an initial target value to calculate an updated initial target value, comparing the updated initial target value with maximum instantaneous power, if the updated initial target value is smaller, updating the subsequent instantaneous power with the initial target value to have the updated initial target value, and if the update initial target value is larger, updating the instantaneous power with the initial target value to be the maximum instantaneous power and setting the maximum instantaneous power as the updated initial target value and
   power arbitration means for calculating a total value of power consumed by an electrical device having transmitted a power request message and an electrical device in operation for a time when the power request message is received from the smart tap, calculating priorities of the electrical devices based on electrical device property class data, in which electrical devices are classified into classes according to properties of methods for supplying power to an electrical device, comparing the total value of the consumed power with the updated initial target value, if the total value of the consumed power is smaller, supplying power to the electrical device having performed transmission, if the total value of the consumed power is larger, calling up the priorities from the memory to select an electrical device having the minimum priority, determining which of the properties the electrical device corresponds to, with reference to the electrical device property class data, and performing arbitration based on the priorities of the electrical devices according to the property, to which the electrical device corresponds.

2. The on-demand power control system according to claim 1, wherein the instantaneous power is consumed power which is obtained by adding up consumed power in each of intervals of a minimum control interval $\tau$ to obtain a total value and averaging the total value.

3. The on-demand power control system according to claim 2, wherein the minimum control interval $\tau$ is 5 to 10 minutes.

**4.** The on-demand power control system according to claim 3, wherein information to be processed by the initial target value updating means is the instantaneous power, and information to be processed by the power arbitration means is the consumed power.

**5.** The on-demand power control system according to claim 4, wherein a power use plan in which the initial target value is created based on a user's pattern of power consumption is created using one of a fixed rate reduction plan, a peak reduction plan, and a cost reduction plan.

**6.** The on-demand power control system according to claim 5, wherein an initial target value $T_0(t)$ (W) which is created using the fixed rate reduction plan is given by equations (1) and (2):

$$D'(t) = \begin{cases} D(t) & if \ D(t) \leq M(t) \\ M(t) & otherwise \end{cases} \tag{1}$$

$$T_0(t) = \frac{C}{\sum_{t_{start}}^{t_{end}} \tau \ D'(t)} D'(t) \tag{2}$$

where C (Wh) is a ceiling set by the user, M(t) (W) is maximum instantaneous power at a time t, and D(t) (W) is a predicted value for power demand at the time t.

**7.** The on-demand power control system according to claim 5, wherein an initial target value created in the peak reduction plan is created by reducing an initial target value only during on-peak power use hours in the power use plan.

**8.** The on-demand power control system according to claim 5, wherein an initial target value created in the cost reduction plan is created by reducing an initial target value in the power use plan according to power costs.

**9.** The on-demand power control system according to any one of claims 1 to 8, wherein the dynamic priority control apparatus controls power supply to the electrical devices such that the ceiling is not exceeded and the maximum instantaneous power is not exceeded.

**10.** The on-demand power control system according to claim 9, wherein the instantaneous power with the initial target value, the actual instantaneous power, and the electrical device property class data are stored in the memory before the dynamic priority control apparatus is activated.

**11.** The on-demand power control system according to claim 10, wherein a method for allocating the difference to be allocated to the subsequent instantaneous power with the initial target value is one of an equal difference allocation method that equally allocates the difference and an instantaneous power allocation method that allocates the difference to only one immediately succeeding instantaneous power.

**12.** The on-demand power control system according to claim 11, wherein the electrical device property class data is segmented according to properties of methods for supplying power to an adjustable electrical device, a suspendable electrical device, and a waitable electrical device among electrical devices.

**13.** The on-demand power control system according to claim 12, wherein the electrical device property data has a segment for which a user can arbitrarily select a device in order to ensure a safe and comfortable life in addition to segments for the properties of the methods for supplying power to an adjustable electrical device, a suspendable electrical device, and a waitable electrical device among the electrical devices.

**14.** The on-demand power control system according to claim 12, wherein the adjustable property is a property which allows change of power supplied during operation, the waitable property is a property which allows waiting for power supply at startup, and the suspendable property is a property which allows suspension of power supply during operation.

15. The on-demand power control system according to claim 14, wherein electrical devices having the adjustable property include a notebook PC, a boiler, a toilet seat with a warm-water shower feature, a microwave oven, a heater air conditioner, a refrigerator, a TV, and a dryer.

16. The on-demand power control system according to claim 14, wherein electrical devices having the waitable property include a notebook PC, a boiler, a toilet seat with a warm-water shower feature, a microwave oven, a dishwasher, a rice cooker, and a toaster.

17. The on-demand power control system according to claim 14, wherein electrical devices having the suspendable property include a notebook PC, a boiler, a heater air conditioner, a refrigerator, a dishwasher, a rice cooker, a copying machine, and an electric pot.

18. The on-demand power control system according to claim 14, wherein electrical devices not having the adjustable, suspendable, and waitable properties include a gas detector, a respirator, and a network device such as a router.

19. The on-demand power control system according to claim 12, wherein the electrical device property class data is composed of respective parts for eight classes.

20. An on-demand power control system wherein a dynamic priority control apparatus according to claim 1 further comprises continuous monitoring means for monitoring consumed power at all times.

21. The on-demand power control system according to claim 20, wherein the continuous monitoring means controls power supply such that overall consumed power falls below the maximum instantaneous power without waiting for a lapse of the minimum control interval $\tau$ if the overall consumed power exceeds the maximum instantaneous power for a fixed period d or longer.

22. The on-demand power control system according to claim 21, wherein the fixed period d is 0.5 to 2 seconds.

23. The on-demand power control system according to any one of claims 20 to 22, wherein the continuous monitoring means calculates a total value of power consumed by electrical devices in operation, calculates priorities of the electrical devices based on electrical device property class data, in which electrical devices are classified into classes according to three types of properties, compares the total value of the consumed power with the maximum instantaneous power, if the total value of the consumed power is smaller, ends processing, if the total value of the consumed power is larger, selects an electrical device having the minimum priority, determines which of the three types of properties the electrical device corresponds to, with reference to the electrical device property class data, and selects a device having the minimum priority according to the property, to which the electrical device corresponds.

24. A program for causing a computer to operate as a dynamic priority control apparatus in an on-demand power control system, the on-demand power control system comprising a commercial power source, a plurality of electrical devices, a smart tap connected to the electrical devices, the dynamic priority control apparatus which includes a memory and controls power supply to the electrical devices, and a network to which the dynamic priority control apparatus is connected via the smart tap, the program causing the computer to execute, by the dynamic priority control apparatus,
a process of allocating a difference between instantaneous power with an initial target value and actual instantaneous power to subsequent instantaneous power with an initial target value to calculate an updated initial target value, comparing the updated initial target value with maximum instantaneous power, if the updated initial target value is smaller, updating the subsequent instantaneous power with the initial target value to have the updated initial target value, and if the update initial target value is larger, updating the instantaneous power with the initial target value to be the maximum instantaneous power and setting the maximum instantaneous power as the updated initial target value and
a process of calculating a total value of power consumed by an electrical device having transmitted a power request message and an electrical device in operation for a time when the power request message is received from the smart tap, calculating priorities of the electrical devices based on electrical device property class data, in which electrical devices are classified into classes according to three types of properties, comparing the total value of the consumed power with the updated initial target value, if the total value of the consumed power is smaller, supplying power to the electrical device having performed transmission, if the total value of the consumed power is larger, calling up the priorities from the memory to select an electrical device having the minimum priority, determining which of the three types of properties the electrical device corresponds to, with reference to the electrical device property class data, and performing arbitration based on the priorities of the electrical devices according to the property, to which the electrical device corresponds.

25. The program executed by the computer according to claim 24, wherein the instantaneous power is consumed power that is obtained by adding up consumed power in each of intervals of a minimum control interval τ to obtain a total value and averaging the total value.

26. The program executed by the computer according to claim 25, wherein the minimum control interval τ is 5 to 10 minutes.

27. The program executed by the computer according to claim 26, wherein information to be processed by the initial target value updating means is the instantaneous power, and information to be processed by the power arbitration means is the consumed power.

28. The program executed by the computer according to claim 24, wherein power supply to the electrical devices is controlled such that the ceiling is not exceeded and the maximum instantaneous power is not exceeded.

29. The program executed by the computer according to claim 28, wherein the electrical device property class data is segmented according to adjustable, suspendable, and waitable properties of electrical devices.

30. The program executed by the computer according to claim 29, wherein the electrical device property data has a segment for which a user can arbitrarily select a device in order to ensure a safe and comfortable life in addition to segments for the properties of methods for supplying power to an adjustable electrical device, a suspendable electrical device, and a waitable electrical device among the electrical devices.

31. The program executed by the computer according to claim 29, wherein the adjustable property is a property which allows change of power supplied during operation, the waitable property is a property which allows waiting for power supply at startup, and the suspendable property is a property which allows suspension of power supply during operation.

32. The program executed by the computer according to claim 31, wherein electrical devices having the adjustable property include a notebook PC, a boiler, a toilet seat with a warm-water shower feature, a microwave oven, a heater air conditioner, a refrigerator, a TV, and a dryer.

33. The program executed by the computer according to claim 31, wherein electrical devices having the waitable property include a notebook PC, a boiler, a toilet seat with a warm-water shower feature, a microwave oven, a dishwasher, a rice cooker, and a toaster.

34. The program executed by the computer according to claim 31, wherein electrical devices having the suspendable property include a notebook PC, a boiler, a heater air conditioner, a refrigerator, a dishwasher, a rice cooker, a copying machine, and an electric pot.

35. The program executed by the computer according to claim 30, wherein electrical devices not having the adjustable, suspendable, and waitable properties include a gas detector, a respirator, and a network device such as a router.

36. A computer-readable recording medium recording a program according to claim 24.

37. A computer-readable recording medium recording a program according to claim 25.

38. A computer-readable recording medium recording a program according to claim 28.

39. A computer-readable recording medium recording a program according to claim 30.

[Figure 1]

[Figure 2]

[Figure 3]

[Figure 4]

[Figure 5]

HOME APPLIANCE ARRANGEMENT

[Figure 6]

[Figure 7]

[Figure 8]

[Figure 9-1]

[Figure 9-2]

[Figure 9-3]

[Figure10]

[Figure 11]

[Figure 12]

[Figure 13]

[Figure 14]

[Figure15]

REQUESTING HOME APPLIANCE — DYNAMIC PRIORITY CONTROL APPARATUS — DIFFERENT HOME APPLIANCE

1. POWER REQUEST MESSAGE

DETERMINE WHETHER TO GIVE PERMISSION TO EACH HOME APPLIANCE ACCORDING TO PRIORITY OF HOME APPLIANCE

2. POWER ASSIGNMENT MESSAGE

2'. REFUSAL MESSAGE

3. POWER REQUEST MESSAGE

4. REASSIGNMENT MESSAGE

[Figure 16]

ST                                                                    11

        (1)                    (2)

10                                    POWER REQUEST MESSAGE
                                                              1
CONSUMED POWER

INITIAL TARGET VALUE AND
ACTUAL INSTANTANEOUS POWER      INITIAL TARGET VALUE    120
                                UPDATING MEANS
MAXIMUM
INSTANTANEOUS POWER      UPDATED INITIAL
CONSUMED POWER OF ASSOCIATED   TARGET VALUE
ELECTRONIC DEVICE
                               PRIORITY ARBITRATION    122
PROPERTY CLASS ETC.            MEANS

PRIORITY
                               PERMISSION MESSAGE
                               REFUSAL MESSAGE
MAXIMUM
INSTANTANEOUS POWER      CONTINUOUS            124
                        MONITORING MEANS
                                              PERMISSION MESSAGE
                                              REFUSAL MESSAGE
                                              INTERRUPT MESSAGE

MEMORY

[Figure 17]

START OF
PREPROCESSING

POWER USE PLAN SETTING PROCESS            S1

INITIAL TARGET VALUE SETTING PROCESS

STORE INITIAL TARGET VALUE IN MEMORY OF
DYNAMIC PRIORITY CONTROL APPARATUS

[Figure 18]

START OF DYNAMIC PRIORITY CONTROL
APPARATUS

INITIAL TARGET VALUE UPDATING PROCESS    S3

PRIORITY ARBITRATION PROCESS    S5

[Figure 19]

S1   POWER USE PLAN SETTING
PROCESS

ADD UP CONSUMED POWER TRANSMITTED FROM ST
AT INTERVALS OF ι AND CONVERT TOTAL VALUE TO
INSTANTANEOUS POWER AND INTEGRAL POWER
CONSUMPTION    S11

SET CEILING C (Wh) AND MAXIMUM INSTANTANEOUS POWER M (W)
IN POWER USE PLAN FROM ABOVE INSTANTANEOUS POWER AND
INTEGRAL POWER CONSUMPTION, SUBSTITUTE VALUES INTO
EQUATIONS (1) AND (2) TO CALCULATE INITIAL TARGET VALUE $T_0(t)$
(W), AND STORE INITIAL TARGET VALUE $T_0(t)$ (W) IN MEMORY    S13

END

[Figure 20]

S3  (INITIAL TARGET VALUE UPDATING PROCESS)

CALCULATE ALLOCATED POWER FROM DIFFERENCE BETWEEN INSTANTANEOUS POWER WITH INITIAL TARGET VALUE AND ACTUAL INSTANTANEOUS POWER BY DIFFERENCE ALLOCATION METHOD, ADD ALLOCATED POWER TO SUBSEQUENT INSTANTANEOUS POWER WITH ABOVE INITIAL TARGET VALUE, AND CALCULATE UPDATED INITIAL TARGET VALUE    S31

CALL UP MAXIMUM INSTANTANEOUS POWER FROM MEMORY AND COMPARE ABOVE UPDATED INITIAL TARGET VALUE WITH MAXIMUM INSTANTANEOUS POWER    S33

S35

UPDATED INITIAL TARGET VALUE < MAXIMUM INSTANTANEOUS POWER?    No

Yes

UPDATE SUBSEQUENT INSTANTANEOUS POWER WITH INITIAL TARGET VALUE TO HAVE UPDATED INITIAL TARGET VALUE    S37

UPDATE UPDATED INITIAL TARGET VALUE TO BE EQUAL TO MAXIMUM INSTANTANEOUS POWER    S39

( END )

[Figure 21-1]

S5 ( PRIORITY ARBITRATION
PROCESS )

RECEIVE POWER REQUEST MESSAGE FROM ST — S51

AT TIME OF RECEPTION, CALL UP CONSUMED POWER OF DEVICE
HAVING TRANSMITTED MESSAGE AND DEVICE IN OPERATION
FROM MEMORY, ADD UP CONSUMED POWER, AND CALCULATE
TOTAL VALUE OF CONSUMED POWER OF DEVICES — S53

CALCULATE PRIORITIES OF ABOVE DEVICES BASED ON
PRIORITY FUNCTION WITH REFERENCE TO TABLE 1 AND
STORE PRIORITIES IN MEMORY — S55

COMPARE ABOVE TOTAL VALUE WITH UPDATED INITIAL TARGET VALUE
TRANSMITTED FROM INITIAL TARGET VALUE UPDATING MEANS — S57

S59
TOTAL VALUE OF
CONSUMED POWER < UPDATED
INITIAL TARGET VALUE? — No

Yes

TRANSMIT PERMISSION MESSAGE TO ST OF DEVICE
HAVING PERFORMED TRANSMISSION — S61

( END )

CALL UP ABOVE PRIORITIES FROM
MEMORY AND SELECT DEVICE WITH
MINIMUM PRIORITY — S63

(1)

[Figure 21-2]

(1)

| DETERMINE WHETHER DEVICE IN QUESTION IS ADJUSTABLE WITH REFERENCE TO TABLE 1 | S65 |

S67

ADJUSTABLE? — No → (2)

Yes

| TRANSMIT INTERRUPT MESSAGE FOR REDUCING POWER TO DEVICE IN QUESTION | S69 |

| UPDATE TOTAL VALUE OF CONSUMED POWER BASED ON REDUCED POWER | S71 |

TO S59

[Figure 21-3]

(2)

| DETERMINE WHETHER DEVICE IN QUESTION CORRESPONDS TO ST HAVING TRANSMITTED REQUEST MESSAGE AND IS WAITABLE | S73 |

S75

DEVICE IN QUESTION CORRESPONDS TO ST HAVING TRANSMITTED REQUEST AND IS WAITABLE? — No → (3)

Yes

| TRANSMIT REFUSAL MESSAGE TO ST OF DEVICE IN QUESTION | S77 |

| UPDATE TOTAL VALUE OF CONSUMED POWER BY SUBTRACTING CONSUMED POWER OF DEVICE IN QUESTION FROM TOTAL VALUE | S79 |

TO S59

[Figure 21-4]

(3)

| DETERMINE WHETHER DEVICE IN QUESTION DOES NOT CORRESPOND TO ST HAVING TRANSMITTED REQUEST MESSAGE AND IS SUSPENDABLE | S81 |

S83

DEVICE IN QUESTION DOES NOT CORRESPOND TO ST HAVING TRANSMITTED REQUEST AND IS SUSPENDABLE? —— No

Yes

| TRANSMIT REFUSAL MESSAGE TO ST OF DEVICE IN QUESTION | S85 |

| UPDATE TOTAL VALUE OF CONSUMED POWER BY SUBTRACTING CONSUMED POWER OF DEVICE IN QUESTION FROM TOTAL VALUE | S87 |

TO S59

END

[Figure 22-1]

S9 **CONTINUOUS MONITORING PROCESS**

| CALL UP MAXIMUM INSTANTANEOUS POWER FROM MEMORY | S91 |

| CALL UP CONSUMED POWER OF DEVICES IN OPERATION FROM MEMORY, ADD UP CONSUMED POWER TO CALCULATE TOTAL VALUE, AND STORE TOTAL VALUE IN MEMORY AT INTERVALS OF FIXED PERIOD δ | S93 |

| REFER TO TABLE 1, CALCULATE PRIORITIES OF ABOVE DEVICES BASED ON PRIORITY FUNCTION, AND STORE PRIORITIES IN MEMORY | S95 |

| COMPARE ABOVE TOTAL VALUE OF CONSUMED POWER WITH ABOVE MAXIMUM INSTANTANEOUS POWER | S97 |

S99
TOTAL VALUE OF CONSUMED POWER < MAXIMUM INSTANTANEOUS POWER

No → CALL UP ABOVE PRIORITIES FROM MEMORY AND SELECT DEVICE WITH MINIMUM PRIORITY | S101

Yes ↓

END

(4)

[Figure 22-2]

(4)

DETERMINE WHETHER DEVICE IN QUESTION IS
ADJUSTABLE WITH REFERENCE TO TABLE 1    S103

ADJUSTABLE?    S105    No    (5)

Yes

TRANSMIT INTERRUPT MESSAGE FOR REDUCING
POWER TO DEVICE IN QUESTION    S107

UPDATE TOTAL VALUE OF CONSUMED POWER BASED
ON REDUCED POWER    S109

TO S99

[Figure 22-3]

(5)

| |
|---|
| DETERMINE WHETHER DEVICE IN QUESTION IS SUSPENDABLE |

S111

S113

SUSPENDABLE?

No

Yes

| |
|---|
| TRANSMIT REFUSAL MESSAGE TO ST OF DEVICE IN QUESTION |

S115

| |
|---|
| UPDATE TOTAL VALUE OF CONSUMED POWER BY SUBTRACTING CONSUMED POWER OF DEVICE IN QUESTION FROM TOTAL VALUE |

S117

TO S99

END

[Figure 23-1]

Main Graph — Power(W)

700
600
500
400
300
200
100
0
-130 -120 -110 -100 -90 -80 -70 -60 -50 -40 -30 -20 -10 0
time

Sub Graph — IntegratingPower(Wh)

50
45
40
35
30
25
20
15
10
5
0
-150 -125 -100 -75 -50 -25 0

Pop-up Window

Power of 70 W was supplied to the TV in dark mode.

PowerDisplay

Appliances

TV
No.1    70W
Current state   dark:70.0W

AirConditioner
No.2    367W
Current state   ON:250.0W

LivingLight
No.3    93W
Current state   ON:90.0W

BedroomLight
No.4    96W
Current state   ON:95.0W

CorridorLight
No.5    145W
Current state   ON:145.0W

Pot
No.6    0W
Current state   OFF:0.0W

config
Target value : 800W   800   set
Under surveillance Maximum instantaneous power :2000W   2000   set   stop

[Figure 23-2]

[Figure 23-3]

Main Graph

Power(W)

700
600
500
400
300
200
100
0

-130 -120 -110 -100 -90 -80 -70 -60 -50 -40 -30 -20 -10 0
time

Appliances

Pot
No.1          0W
ON: Requesting 1200.0 W

TV
No.2          70W
Current state dark:70.0W

AirConditioner
No.3          451W
Current state ON:250.0W

LivingLight
No.4          93W
Current state ON:90.0W

BedroomLight
No.5          95W
Current state ON:95.0W

CorridorLight
No.6          146W
Current state ON:145.0W

config
Target : 800W  800
value
Under surveillance Maximum :2000W 2000
instantaneous power

set
stop
set

Sub Graph
IntegratingPower(Wh)

50
45
40
35
30
25
20
15
10
5
0

-150 -125 -100 -75 -50 -25 0

Pop-up Window

Power of 70 W was supplied to the TV in dark mode.

PowerDisplay

[Figure 23-4]

**Main Graph**

Power(W)

700
600
500
400
300
200
100
0

-130  -120  -110  -100  -90  -80  -70  -60  -50  -40  -30  -20  -10  0

time

**Sub Graph**

IntegratingPower(Wh)

50
45
40
35
30
25
20
15
10
5
0

-150    -125    -100    -75    -50    -25    0

**Pop-up Window**

Power of 1200 W was supplied to the pot in ON mode.

**PowerDisplay**

**Appliances**

**TV**

No.1          70W

Current state    dark:70.0W

**Pot**

No.2          1191W

Current state   ON:1200.0W

**AirConditioner**

No.3          488W

Current state   ON:250.0W

**LivingLight**

No.4           94W

Current state   ON:90.0W

**BedroomLight**

No.5           95W

Current state ON:95.0W

**CorridorLight**

No.6           0W

Current state ON:0.0W

**config**

○ ○ ○

Target value  : 800W  800                    set

Under surveillance instantaneous power  Maximum:2000W  2000    set    stop

EP 2 667 473 A1

[Figure 24-1]

[Figure 24-2]

[Figure 25-1]

[Figure 25-2]

NORMAL LIFE (WITHOUT EoD) ---- POWER USE PLAN ——— EXPERIMENTAL RESULT

[Figure 26-1]

[Figure 26-2]

EP 2 667 473 A1

<table>
<tr><td colspan="2" align="center">**INTERNATIONAL SEARCH REPORT**</td><td colspan="2">International application No.<br>PCT/JP2012/068000</td></tr>
</table>

A. CLASSIFICATION OF SUBJECT MATTER
*H02J3/00*(2006.01)i, *G06Q10/00*(2012.01)i, *H02J13/00*(2006.01)i

According to International Patent Classification (IPC) or to both national classification and IPC

B. FIELDS SEARCHED

Minimum documentation searched (classification system followed by classification symbols)
H02J3/00, G06Q10/00, H02J13/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 6-38369 A (Hitachi, Ltd.),<br>10 February 1994 (10.02.1994),<br>entire text; all drawings<br>(Family: none) | 1-39 |
| A | JP 6-6935 A (Brother Industries, Ltd.),<br>14 January 1994 (14.01.1994),<br>entire text; all drawings<br>(Family: none) | 1-39 |
| A | JP 9-252533 A (Toshiba Corp.),<br>22 September 1997 (22.09.1997),<br>entire text; all drawings<br>(Family: none) | 1-39 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 October, 2012 (02.10.12) | Date of mailing of the international search report<br>09 October, 2012 (09.10.12) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008152798 A

- JP 2010193562 A

**Non-patent literature cited in the description**

- **TAKEKAZU KATO.** i-Energy and Smart Grid. *IEICE technical report,* 19 January 2009, 133-138

- **TAKASHI MATSUYAMA.** i-Energy and Smart Grid. *Graduate School,* 29 July 2009, 21